# EUROPEAN PATENT SPECIFICATION

(11) **EP 4 307 171 B1**
(45) Date of publication and mention of the grant of the patent: **19.08.2026**
(21) Application number: 23178481.0
(22) Date of filing: 09.06.2023
(51) Int. Cl.: G06T 19/20, G06N 3/02, G06N 10/00, G06T 13/40, G06N 3/042, G06N 3/0455, G06T 19/00, G06N 3/088, G06N 3/09

(54) **SYSTEMS AND METHODS FOR SIMULATING GARMENTS ON TARGET BODY POSES**
SYSTEME UND VERFAHREN ZUR SIMULATION VON KLEIDUNGSSTÜCKEN AUF ZIELKÖRPERPOSEN
SYSTÈMES ET PROCÉDÉS DE SIMULATION DE VÊTEMENTS SUR DES POSES CORPORELLES CIBLES

(30) Priority: 11.07.2022 IN 202221039816
(43) Date of publication of application: 17.01.2024
(73) Proprietor: Tata Consultancy Services Limited, Maharashtra (IN)
(72) Inventor: TIWARI, LOKENDER, 110001 New Delhi, Delhi (IN); BHOWMICK, BROJESHWAR, 700160 Kolkata, West Bengal (IN)
(74) Representative: Goddar, Heinz J.

(56) References cited:
- YUDI LI ET AL: "N-Cloth: Predicting 3D Cloth Deformation with Mesh-Based Networks", ARXIV.ORG, CORNELL UNIVERSITY LIBRARY, 201 OLIN LIBRARY CORNELL UNIVERSITY ITHACA, NY 14853, 28 May 2022 (2022-05-28), XP091228268
- WANG TUANFENG Y YANGTUANFENG WANG 14@UCL AC UK ET AL: "Learning an intrinsic garment space for interactive authoring of garment animation", ACM TRANSACTIONS ON GRAPHICS, ACM, NY, US, vol. 38, no. 6, 8 November 2019 (2019-11-08), pages 1 - 12, XP058686742, ISSN: 0730-0301, DOI: 10.1145/3355089.3356512
- XIAOYU PAN ET AL: "Predicting Loose-Fitting Garment Deformations Using Bone-Driven Motion Networks", ARXIV.ORG, CORNELL UNIVERSITY LIBRARY, 201 OLIN LIBRARY CORNELL UNIVERSITY ITHACA, NY 14853, 3 May 2022 (2022-05-03), XP091220392, DOI: 10.1145/3528233.3530709

## Description

### CROSS-REFERENCE TO RELATED APPLICATIONS AND PRIORITY

The present application claims priority to Indian application no. 202221039816, filed on July 11, 2022.

### TECHNICAL FIELD

The disclosure herein generally relates to simulation techniques, and, more particularly, to systems and methods for simulating garments on target body poses.

### BACKGROUND

Garments in their natural form are represented by meshes, where vertices (entities) are connected (related) to each other through mesh edges. Earlier methods largely ignore this relational nature of garment data while modeling garments and networks. YUDI LI ET AL: "N-Cloth: Predicting 3D Cloth Deformation with Mesh-Based Networks",ARXIV.ORG, CORNELL UNIVERSITY LIBRARY, 201 OLIN LIBRARY CORNELL UNIVERSITY ITHACA, NY 14853, 28 May 2022, discloses a mesh-based learning approach for plausible 3D cloth deformation prediction. The network can predict the target 3D cloth mesh deformation based on the initial state of the cloth mesh template and the target obstacle mesh.

Simulating garments on arbitrary body poses is crucial for many applications related to video games, three-dimensional (3D) content creation, virtual try-on etc. Physics-based simulation (PBS) has always been a go-to option to simulate the garments accurately and realistically on the target body pose. However, PBS has two major drawbacks. First, they are computationally expensive, and second, they require experts with good domain knowledge for governing the quality of the simulation. Despite the advantages, learning-based methods have several limitations such as fixed topologies, garment representation, fixed cloth type, fixed body shape and/or pose, and the like. Moreover, majority of the existing methods have highlighted their limitations for loose garments such as long skirts and fabric properties. Another issue faced by the earlier or conventional methods is learning on high-resolution garment meshes, which increases the overall training time. Hence, reducing the resolution is also not a solution as it degrades the quality of their results.

### SUMMARY

Embodiments of the present disclosure present technological improvements as solutions to one or more of the above-mentioned technical problems recognized by the inventors in conventional systems. The invention is defined in the claims.

For example, in one aspect, there is provided a processor implemented method for simulating garments on target body poses. The method comprises obtaining, via one or more hardware processors, an input data comprising a garment template draped on a canonical body pose, and a target body pose; generating, via a first set of plurality of encoders via the one or more hardware processors, a plurality of garment aware node features ( ) based on the garment template; generating, via a second set of plurality of encoders via the one or more hardware processors, a plurality of body and motion aware node features (*µ*) based on the canonical body pose, and the target body pose; fusing, via the one or more hardware processors, the plurality of garment aware node features ( ) and the plurality of body and motion aware node features (*µ*) to obtain a set of fused node features (*η*); obtaining, via the one or more hardware processors, a set of edge features (*π*) based on a plurality of relative positions (*ε*, *ε^{prior}*) of a plurality of edges comprised in the garment template; generating, via the one or more hardware processors, an encoded garment graph based on the set of fused node features (*η*) and the set of edge features (*π*); processing, via the one or more hardware processors, the encoded garment graph to obtain a processed encoded garment graph with an updated set of edge features and an updated set of node features; and predicting, by using a dynamics decoder via the one or more hardware processors, a simulated garment on the target body pose based on the processed encoded garment graph with the updated set of edge features and the updated set of node features.

In an embodiment, the plurality of garment aware node features ( ) is obtained by generating, by using a first encoder amongst the first set of plurality of encoders via the one or more hardware processors, a plurality of high-dimensional per-vertex garment geometric features (*X^{gar}*) based on the garment template; and concatenating, by using a second encoder amongst the first set of plurality of encoders via the one or more hardware processors, the plurality of high-dimensional per-vertex garment geometric features (*X^{gar}*), a fabric specific data associated (*f*) with the garment template, and a relative position of a plurality of garment vertices (*p*, *p^{prior}*) comprised in the garment template to obtain the plurality of garment aware node features ( ).

In an embodiment, the plurality of body and motion aware node features (*µ*) is obtained by generating, by using a first encoder amongst the second set of plurality of encoders via the one or more hardware processors, a plurality of per-vertex body geometric features (*X^{body}*) based on a garment portion comprised in the canonical body pose; generating, by using a second encoder amongst the second set of plurality of encoders via the one or more hardware processors, one or more garment aware body semantics (*S*) based on the canonical body pose; and concatenating, by using a third encoder amongst the second set of plurality of encoders via the one or more hardware processors, a plurality of relative motion vectors (*δ*), the one or more garment aware body semantics (*S*), and the plurality of per-vertex body geometric features (*X^{body}*) to obtain the plurality of body and motion aware node features (*µ*).

In an embodiment, the simulated garment comprises information on velocity at each vertex of the processed encoded garment graph.

In an embodiment, the velocity at each vertex of the processed encoded garment graph comprises direction and magnitude of motion of the garment template.

In another aspect, there is provided a processor implemented system for simulating garments on target body poses. The system comprises: a memory storing instructions; one or more communication interfaces; and one or more hardware processors coupled to the memory via the one or more communication interfaces, wherein the one or more hardware processors are configured by the instructions to: obtain an input data comprising a garment template draped on a canonical body pose, and a target body pose; generate, via a first set of plurality of encoders, a plurality of garment aware node features ( ) based on the garment template; generate, via a second set of plurality of encoders, a plurality of body and motion aware node features (*µ*) based on the canonical body pose, and the target body pose; fuse the plurality of garment aware node features ( ) and the plurality of body and motion aware node features (*µ*) to obtain a set of fused node features (*η*); obtain a set of edge features (*π*) based on a plurality of relative positions (*ε, ε^{prior}*) of a plurality of edges comprised in the garment template; generate an encoded garment graph based on the set of fused node features (*η*) and the set of edge features (*π*); process the encoded garment graph to obtain a processed encoded garment graph with an updated set of edge features and an updated set of node features; and predict, by using a dynamics decoder, a simulated garment on the target body pose based on the processed encoded garment graph with the updated set of edge features and the updated set of node features.

In an embodiment, the plurality of garment aware node features ( ) is obtained by generating, by using a first encoder amongst the first set of plurality of encoders via the one or more hardware processors, a plurality of high-dimensional per-vertex garment geometric features (*X^{gar}*) based on the garment template; and concatenating, by using a second encoder amongst the first set of plurality of encoders via the one or more hardware processors, the plurality of high-dimensional per-vertex garment geometric features (*X^{gar}*), a fabric specific data associated (*f*) with the garment template, and a relative position of a plurality of garment vertices (*p*, *p^{prior}*) comprised in the garment template to obtain the plurality of garment aware node features ( ).

In an embodiment, the plurality of body and motion aware node features (*µ*) is obtained by generating, by using a first encoder amongst the second set of plurality of encoders via the one or more hardware processors, a plurality of per-vertex body geometric features (*X^{body}*) based on a garment portion comprised in the canonical body pose; generating, by using a second encoder amongst the second set of plurality of encoders via the one or more hardware processors, one or more garment aware body semantics (*S*) based on the canonical body pose; and concatenating, by using a third encoder amongst the second set of plurality of encoders via the one or more hardware processors, a plurality of relative motion vectors (*δ*), the one or more garment aware body semantics (*S*), and the plurality of per-vertex body geometric features (*X^{body}*) to obtain the plurality of body and motion aware node features (*µ*).

In an embodiment, the simulated garment comprises information on velocity at each vertex of the processed encoded garment graph.

In an embodiment, the velocity at each vertex of the processed encoded garment graph comprises direction and magnitude of motion of the garment template.

In yet another aspect, there are provided one or more non-transitory machine-readable information storage mediums comprising one or more instructions which when executed by one or more hardware processors cause simulating garments on target body poses by obtaining an input data comprising a garment template draped on a canonical body pose, and a target body pose; generating, via a first set of plurality of encoders, a plurality of garment aware node features ( ) based on the garment template; generating, via a second set of plurality of encoders, a plurality of body and motion aware node features (*µ*) based on the canonical body pose, and the target body pose; fusing the plurality of garment aware node features ( ) and the plurality of body and motion aware node features (*µ*) to obtain a set of fused node features (*η*); obtaining, via the one or more hardware processors, a set of edge features (*π*) based on a plurality of relative positions (*ε, ε^{prior}*) of a plurality of edges comprised in the garment template; generating an encoded garment graph based on the set of fused node features (*η*) and the set of edge features (*π*); processing the encoded garment graph to obtain a processed encoded garment graph with an updated set of edge features and an updated set of node features; and predicting, by using a dynamics decoder, a simulated garment on the target body pose based on the processed encoded garment graph with the updated set of edge features and the updated set of node features.

In an embodiment, the plurality of garment aware node features ( ) is obtained by generating, by using a first encoder amongst the first set of plurality of encoders via the one or more hardware processors, a plurality of high-dimensional per-vertex garment geometric features (*X^{gar}*) based on the garment template; and concatenating, by using a second encoder amongst the first set of plurality of encoders via the one or more hardware processors, the plurality of high-dimensional per-vertex garment geometric features (*X^{gar}*), a fabric specific data associated (*f*) with the garment template, and a relative position of a plurality of garment vertices (*p*, *p^{prior}*) comprised in the garment template to obtain the plurality of garment aware node features ( ).

In an embodiment, the plurality of body and motion aware node features (*µ*) is obtained by generating, by using a first encoder amongst the second set of plurality of encoders via the one or more hardware processors, a plurality of per-vertex body geometric features (*X^{body}*) based on a garment portion comprised in the canonical body pose; generating, by using a second encoder amongst the second set of plurality of encoders via the one or more hardware processors, one or more garment aware body semantics (*S*) based on the canonical body pose; and concatenating, by using a third encoder amongst the second set of plurality of encoders via the one or more hardware processors, a plurality of relative motion vectors (*δ*), the one or more garment aware body semantics (*S*), and the plurality of per-vertex body geometric features (*X^{body}*) to obtain the plurality of body and motion aware node features *(µ*).

In an embodiment, the simulated garment comprises information on velocity at each vertex of the processed encoded garment graph.

In an embodiment, the velocity at each vertex of the processed encoded garment graph comprises direction and magnitude of motion of the garment template.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary system for simulating garments on target body poses, in accordance with an embodiment of the present disclosure.
FIG. 2 is a functional block diagram according to some embodiments of the present disclosure.
FIG. 3 depicts an exemplary flow chart illustrating a method for simulating garments on target body poses, using the systems of FIG. 1-2, in accordance with an embodiment of the present disclosure.
FIG. 4 depicts deformation prior observed in a garment, as known in the art.
FIG. 5 depicts an exemplary message passing method to obtain an updated set of edge features and an updated set of node features, in accordance with an embodiment of the present disclosure.
FIG. 6A depicts sample qualitative results of the method of FIG. 3, in accordance with an embodiment of the present disclosure.
FIG. 6B depicts a result on fabric aware simulations, in accordance with an embodiment of the present disclosure
FIG. 7 depicts a qualitative comparison of the results of the method of FIG. 3 with conventional approaches, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Simulating garments on arbitrary body poses is crucial for many applications related to video games, 3D content creation, virtual try-on etc. Physics-based simulation (PBS) has always been a go-to option to accurately and realistically simulate the garments on the target body pose. However, PBS has two major drawbacks. First, they are computationally expensive, and second, they require experts with good domain knowledge for governing the quality of the simulation.

To reduce the manual intervention and increase the speed, several attempts have been made to learn garment deformations using the ground truth PBS data. Despite the advantages, learning-based methods have several limitations such as: *fixed topologies:* TailorNet (e.g., refer "Patel, C., Liao, Z., Pons-Moll, G.: Tailornet: Predicting clothing in 3d as a function of human pose, shape and garment style. In: Proceedings of the IEEE/CVF Conference on Computer Vision and Pattern Recognition. pp. 7365-7375 (2020)"), DeepDraper (e.g., refer "Tiwari, L., Bhowmick, B.: Deepdraper: Fast and accurate 3d garment draping over a 3d human body. In: Proceedings of the IEEE/CVF International Conference on Computer Vision. pp. 1416-1426 (2021)") represent different sizes of a garment (e.g., t-shirt) with the same number of vertices which limits the applicability for the loose garments as they require more vertices to represent, *garment representation:* methods that represent garments in the format other than raw meshes are difficult to generalize during test time e.g., TailorNet represented garments in the PCA space, *fixed cloth type:* several methods like TailorNet, GarNet (e.g., refer "Gundogdu, E., Constantin, V., Parashar, S., Seifoddini, A., Dang, M., Salzmann, M., Fua, P.: Garnet++: Improving fast and accurate static 3d cloth draping by curvature loss. IEEE Transactions on Pattern Analysis and Machine Intelligence 44(1), 181-195 (2020)"), DeepDraper, PBNS (e.g., refer "Bertiche, H., Madadi, M., Escalera, S.: Pbns: physically based neural simulation for unsupervised garment pose space deformation. ACM Transactions on Graphics (TOG) 40(6), 1-14 (2021)") are trained only for a single garment type, *fixed body shape and*/*or pose*: Training for a single body shape or pose for garment simulation limits the applicability of the methods like DeepWrinkles (e.g., refer "Lahner, Z., Cremers, D., Tung, T.: Deepwrinkles: Accurate and realistic clothing modeling. In: Proceedings of the European Conference on Computer Vision (ECCV). pp. 667-684 (2018)") and Parametric VITON (e.g., refer "Vidaurre, R., Santesteban, I., Garces, E., Casas, D.: Fully convolutional graph neural networks for parametric virtual try-on. In: Computer Graphics Forum. vol. 39, pp. 145-156. Wiley Online Library (2020)"). Moreover, majority of the existing methods have highlighted their limitations for loose garments such as long skirts and fabric properties.

Embodiments of the present disclosure provide systems and methods that consider garment deformation as a physical phenomenon caused by underlying body movement. One key property of garment mesh deformation is, its vertices do not move (deform) in isolation, rather the movement (deformation) of each vertex is highly influenced by the movement of its neighboring vertices connected by mesh edges. This relational inductive bias (e.g., refer "Battaglia, P.W., Hamrick, J.B., Bapst, V., Sanchez-Gonzalez, A., Zambaldi, V., Malinowski, M., Tacchetti, A., Raposo, D., Santoro, A., Faulkner, R., et al.: Relational inductive biases, deep learning, and graph networks. arXiv preprint arxiv:1806.01261 (2018)") at the vertex level deformation has been largely ignored by previous methods while modeling garment deformation on the arbitrary human body shape and pose. But this property of the relational inductive bias Battaglia et al. has been successfully used in modeling complex physical phenomena such as fluid dynamics, deformable materials etc. (e.g., refer "Sanchez-Gonzalez, A., Godwin, J., Pfaff, T., Ying, R., Leskovec, J., Battaglia, P.: Learning to simulate complex physics with graph networks. In: International Conference on Machine Learning. pp. 8459-8468. PMLR (2020)", and "Pfaff, T., Fortunato, M., Sanchez-Gonzalez, A., Battaglia, P.: Learning mesh-based simulation with graph networks. In: International Conference on Learning Representations (2020)") In the present disclosure, the system implemented the method by exploiting this property to simulate garments on the arbitrary body and poses. To efficiently learn the deformations, the system described herein encoded the garment mesh into a graph, where garment vertices are encoded at the graph nodes. This helps in handling loose garments and gives the ability to work with multiple garment types with different types of topologies leading to a better generalization.

Another issue faced by the earlier or conventional methods is learning on high-resolution garment meshes, which increases the overall training time. Reducing the resolution degrades the quality of their results. Since, the method of the present disclosure learns vertex level dynamics, it's performance does not deteriorate by low resolution (by a factor of 4 in CLOTH3D dataset) training and outperformed the state-of the-art methods such as DeePSD (e.g., refer "Bertiche, H., Madadi, M., Tylson, E., Escalera, S.: Deepsd: Automatic deep skinning and pose space deformation for 3d garment animation. In: Proceedings of the IEEE/CVF International Conference on Computer Vision. pp. 5471-5480 (2021)"), PBNS, TailorNet, DeepDraper[29] significantly (e.g., refer experimental results below).

Therefore, the main contributions by the system and method of the present disclosure are:
1. Garment Deformation as Physical Phenomenon: The system of the present disclosure presents a deep garment simulation method which is based on the principles of particle-based simulation, to predict the dynamics of garments conditioned on the underlying body motion and other cloth properties such as fabric.
2. Relational Inductive Bias: The system exploits the relational nature of garment data and implements the method described herein to enforce the relational inductive bias. This fundamentally enforces that network implemented by the system to learn the motion and fabric aware deformations even for the loose garments.
3. Varying Garment Topology and Resolutions: The modeling as done by the system of the present disclosure allows training on low-resolution garment meshes and testing on arbitrary resolutions. Furthermore, the use of the graph representation allows varying topology garments with the arbitrary ordering of vertices and edge permutations.
4. Variation in Garment Fabric: The method of the present disclosure can simulate garments conditioned on varying fabric types.
5. Generalization and Computational Advantages: The method of the present disclosure generalizes well on unseen garments and body poses.

Referring to conventional approaches, traditional physically based simulators have been used to get realistic cloth deformation where they follow the mass-spring model. While these simulators output high-quality cloth simulations, they are computationally very expensive and require expert intervention. Several, attempts have been made to improve efficiency of these simulators by modifying the simulation pipeline (e.g., refer "Baraff, D., Witkin, A.: Large steps in cloth simulation. In: Proceedings of the 25th annual conference on Computer graphics and interactive techniques. pp. 43-54 (1998)", "Provot, X.: Collision and self-collision handling in cloth model dedicated to design garments. In: Computer Animation and Simulation'97, pp. 177-189. Springer (1997)", and "Provot, X., et al.: Deformation constraints in a mass-spring model to describe rigid cloth behaviour. In: Graphics interface. pp. 147-147. Canadian Information Processing Society (1995)") or leveraging the parallel Graphics Processing Units (GPU) computational capabilities (e.g., refer "Zeller, C.: Cloth simulation on the gpu. In: ACM SIGGRAPH 2005 Sketches, pp. 39-es (2005)", and "Tang, M., Tong, R., Narain, R., Meng, C., Manocha, D.: A gpu-based streaming algorithm for high-resolution cloth simulation. In: Computer Graphics Forum. vol. 32, pp. 21-30. Wiley Online Library (2013)"). Despite all these improvements, traditional physics-based simulators are not ideal for real-time applications running on end devices with limited computational and space limitations.

To alleviate some of the issues of physically based simulator, Linear Blend Skinning (LBS) approach was adopted. In LBS, vertices of garments or outfits were attached to the human body skeleton driving the body motion (e.g., refer "Kavan, L.,Z'ara, J.: Spherical blend skinning: a real-time deformation of articulated models. In: Proceedings of the 2005 symposium on Interactive 3D graphics and games. pp. 9-16 (2005)", "Kavan, L., Collins, S.,Z'ara, J., O' Sullivan, C.: Geometric skinning with approximate dual quaternion blending. ACM Transactions on Graphics (TOG) 27(4), 1-23 (2008)", "Le, B.H., Deng, Z.: Smooth skinning decomposition with rigid bones. ACM Transactions on Graphics (TOG) 31(6), 1-10 (2012)", and "Wang, X.C., Phillips, C.: Multi-weight enveloping: least-squares approximation techniques for skin animation. In: Proceedings of the 2002 ACM SIGGRAPH/Eurographics symposium on Computer animation. pp. 129-138 (2002)"). While the LBS approach helped in improving the efficiency and achieving real-time performance for body-hugging garments, it failed to output realistic garment deformation for loose garments such as skirts, gowns, etc.

To overcome the drawbacks of traditional LBS approach, Pose Space Deformation (PSD) approaches (e.g., refer "Lewis, J.P., Cordner, M., Fong, N.: Pose space deformation: a unified approach to shape interpolation and skeleton-driven deformation. In: Proceedings of the 27th annual conference on Computer graphics and interactive techniques. pp. 165-172 (2000)") were proposed. To avoid the artifacts due to skinning, it added corrective deformations to the mesh in the canonical pose. The same principle was also applied to learn the non-linear mapping for PSD using ground-truth simulation data. Lahner et al. (e.g., refer "Lahner, Z., Cremers, D., Tung, T.: Deepwrinkles: Accurate and realistic clothing modeling. In: Proceedings of the European Conference on Computer Vision (ECCV). pp. 667-684 (2018)") proposed a learned PSD for garments conditioned on temporal features. Santesteban et al. (e.g., refer "Santesteban, I., Otaduy, M.A., Casas, D.: Learning-based animation of clothing for virtual try-on. In: Computer Graphics Forum. vol. 38, pp. 355-366. Wiley Online Library (2019)") learnt per-garment non-linear mapping for PSD. However, these methods suffered from scalability and applicability due to repeating learning requirements. Recently, methods (e.g., refer "Patel, C., Liao, Z., Pons-Moll, G.: Tailornet: Predicting clothing in 3d as a function of human pose, shape and garment style. In: Proceedings of the IEEE/CVF Conference on Computer Vision and Pattern Recognition. pp. 7365-7375 (2020)", and "Tiwari, L., Bhowmick, B.: Deepdraper: Fast and accurate 3d garment draping over a 3d human body. In: Proceedings of the IEEE/CVF International Conference on Computer Vision. pp. 1416-1426 (2021)") were proposed to represent garment as an extension to the SMPL human model, where a garment is modeled as an additional displacement and topology of subsets of body vertices. Patel et al. (e.g., refer "Patel, C., Liao, Z., Pons-Moll, G.: Tailornet: Predicting clothing in 3d as a function of human pose, shape and garment style. In: Proceedings of the IEEE/CVF Conference on Computer Vision and Pattern Recognition. pp. 7365-7375 (2020)") used a parametric representation of garment and was hierarchically trained to learn low-frequency displacement and garment specific high-frequency displacement due to the body pose.

The representation of garments in the above methods restricted them to be topology invariant and also did not worked beyond near body-hugging garments. CLOTH3D (e.g., refer "Bertiche, H., Madadi, M., Escalera, S.: Cloth3d: clothed 3d humans. In: European Conference on Computer Vision. pp. 344-359. Springer (2020)", and "Bertiche, H., Madadi, M., Tylson, E., Escalera, S.: Deepsd: Automatic deep skinning and pose space deformation for 3d garment animation. In: Proceedings of the IEEE/CVF International Conference on Computer Vision. pp. 5471-5480 (2021)") required huge volume of data to train their models. Moreover, these methods do not work for loose garments (e.g., skirts) as mentioned by the authors in these research works. PBNS alleviates the need for huge data in training time, but their model is an outfit and human subject specific.

Other methods (e.g., refer TailorNet, and Gundogdu et al.), where the primary training loss is the *L2* loss with the ground truth (GT) data, are generally biased to produce smooth results. While methods as described above by Bertiche, H. et al. also apply a few physics-inspired losses with a belief that the underlying network (primarily the MLP) will be able to learn the physics of garment deformation. Such methods ignore to leverage the fact that during deformation garment vertices physically interact with each other and induce a local bias in the deformation. This relational nature of garment data is largely ignored by earlier methods. Moreover, none of the existing methods work on simulating loose garments conditioned on underlying human pose.

There has been a great interest in modeling complex physics problems such as fluid dynamics, deformable materials, etc., using deep learning. Recently, particle-based modeling has been shown effective in designing learnable physics-based simulators (e.g., refer "Sanchez-Gonzalez, A., Godwin, J., Pfaff, T., Ying, R., Leskovec, J., Battaglia, P.: Learning to simulate complex physics with graph networks. In: International Conference on Machine Learning. pp. 8459-8468. PMLR (2020) - also referred as Gonzalez et al.", and "Pfaff, T., Fortunato, M., Sanchez-Gonzalez, A., Battaglia, P.: Learning mesh-based simulation with graph networks. In: International Conference on Learning Representations (2020) - also referred as Pfaff et al."). Gonzalez et al. proposed a particle-based method for simulating water, sand, and other deformable materials. In Pfaff et. al. a simulator was proposed for mesh-based objects such as Airfoil, deforming plates, simple cloth. Learning-based methods [26, 22] have shown that they can efficiently learn the mapping between forces and displacements.

In the present disclosure, the method described herein follows the particle-based approach to model the garment deformation due to the movement of the underlying body. More specifically, the method uses the graph representation of the garment mesh and exploits the relational inductive bias with physics-inspired losses to train for garment simulation in a data-driven way. Due to the careful design of the network and losses, the method can work significantly better than the SOTA for simulating loose garments conditioned on the underlying human pose. The method of the present disclosure and associated system described herein learn to simulate garments on arbitrary body poses using the concepts from particle-based modeling. Specifically, the method of the present disclosure takes a template garment draped on the canonical body mesh and a target body pose as inputs and produces the garment draped on the target body pose. The garment mesh is first converted into a graph, where vertices are encoded into the graph nodes. For each node in the graph, the neighborhood nodes are defined through a ball of radius *σ*, and edges are created between them in the Euclidean space. With this graph structure, the method of the present disclosure operates in an encode-process-decode framework to learn the body motion and fabric properties aware garment dynamics. During the encode process, various garment and the body-specific factors are encoded into the nodes and edges of the garment graph. The encoded garment graph is then passed to a process block, where a message passing algorithm is used to accumulate and pass the information to and from the neighboring graph nodes. Finally, the processed garment graph is passed to a decoder that predicts velocity for each garment vertex.

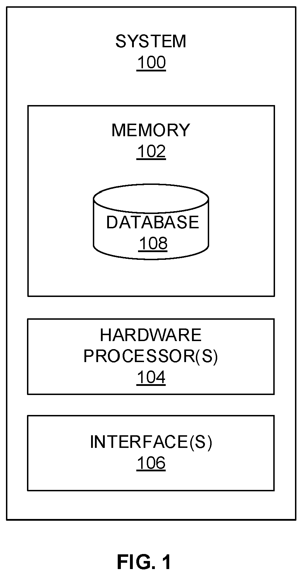

Referring now to the drawings, and more particularly to FIGS. 1 through 7, where similar reference characters denote corresponding features consistently throughout the figures, there are shown preferred embodiments and these embodiments are described in the context of the following exemplary system and/or method.

FIG. 1 depicts an exemplary system 100 for simulating garments on target body poses, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to one or more garment templates (which may be provided by designers or obtained from designers), one or more canonical body poses, one or more target body poses, and the like. The database 108 further comprises a physics-based neural network comprising a plurality of encoders, one or more processing blocks, one or more decoders, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

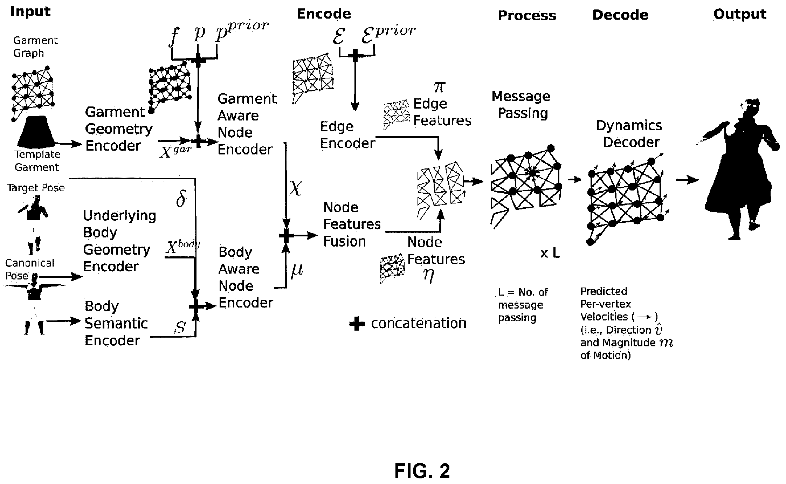

FIG. 2, with reference to FIG. 1, depicts an exemplary high level block diagram of the system 100 for simulating garments on target body poses, in accordance with an embodiment of the present disclosure, in accordance with an embodiment of the present disclosure.

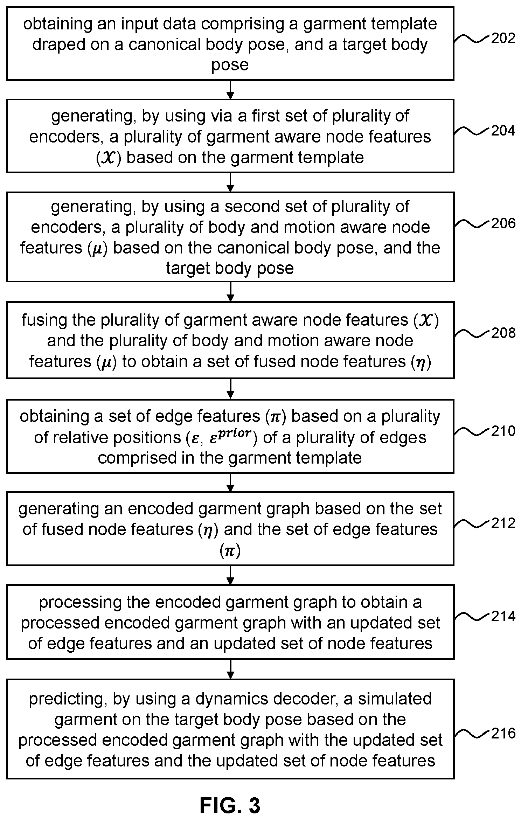

FIG. 3, with reference to FIGS. 1-2, depicts an exemplary flow chart illustrating a method for simulating garments on target body poses, using the systems 100 of FIG. 1-2, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. Prior to discussing the steps of FIG. 3, the present disclosure provides an introduction that serves as a context setting for better understanding of the steps 202 through 214.

Let *G* be the set of vertices of a template garment mesh draped over a 3D human body mesh *B* in a static canonical pose. Assuming, after time *t* the body has moved, and the new body mesh is denoted by *B̅*. The human body motion now induces a secondary motion on garment *G* which results in a new deformed garment mesh *G̅.* The vertices of the garment mesh at time *t* can be modeled using the following relation *G̅ᵢ = Gᵢ + vᵢt,* where velocity *vᵢ* can further be broken down into two parts, the direction *v̂ᵢ*, and the magnitude *mᵢ* of the motion. The equation can be re-written as: ${\overline{G}}_{i} = {G}_{i} + {\hat{v}}_{i} {m}_{i} t$

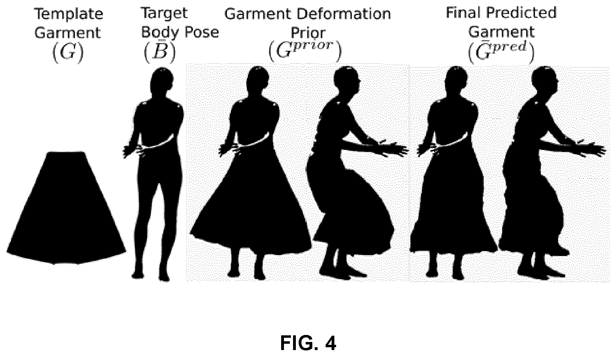

Since, *mᵢ* is always ≥ 0, t is fixed to 1 (e.g., *t* = 1) to ensure the uniqueness of the solution (*v̂ᵢ* and *mᵢ* pair) of equation (1). However, the system 100 can also use direct velocity *vᵢ* instead of splitting it into direction and magnitude, but empirically the system and method found splitting significantly improves the results. While the direction is influenced by several factors such as fabric type, garment geometry, fitting of the garment, etc. to specify in which direction a garment vertex should move, the magnitude specifies how much to move based on the relative body motion. The ablation study on this is presented in later sections of the detailed description. Majority of the recent works (e.g., refer "Patel, C. et al.", "Tiwari, L. et al.", and "Bertiche, H.") assumed that garments closely follow the underlying body motion and borrow blend shape weights for each vertex of the template garment from the closest body vertex in the canonical pose. While this assumption simplifies the problem and works well for tight body-hugging garments, but drastically fails in the case of loose garments such as skirts. In the method of the present disclosure, the system described herein uses this strategy *only* to estimate a prior *G^{prior}* for the garment deformation. Such a prior contains significant artifacts specifically for the loose garments. FIG. 4, with reference to FIGS. 1 through 3, depicts deformation prior observed in a garment, as known in the art. In FIG. 4, strong artifacts such as a big bulge can be observed in the front of the skirt with unrealistic spread out and collisions. The system 100 henceforth refines this ${G}_{i}^{prior}$ by predicting the *v̂ᵢ* and *mᵢ* instead of the original template garment (see FIG. 4 for ${G}_{i}^{prior}$ and its correction by the method of the present disclosure). The system 100 replaces the *G̅ᵢ* with ${G}_{i}^{prior}$ in equation (2). ${\overline{G}}_{i} = {G}_{i}^{prior} + {\hat{v}}_{i} {m}_{i}$

Now, the system 100 describes the steps 202 through 214 that involve encoding, processing encoded information, and decoding the processed output to learn the direction *v̂* and the magnitude of motion *m* for each garment vertices conditioned on the underlying body motion and the cloth properties such as fabric. The steps of the method of the present disclosure will now be explained with reference to components of the system 100 of FIG. 1, the block diagram of the system 100 depicted in FIG. 2, the flow diagram as depicted in FIG. 3, and the above description that serves as the context setting for better understanding of the embodiments of the present disclosure. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.
At step 202 of the method of the present disclosure, the one or more hardware processors 104 obtain an input data comprising a garment template draped on a canonical body pose, and a target body pose. It is to be understood by a person having ordinary skill in the art or person skilled in the art that information on a garment or the garment template may be obtained from a user (e.g., designer) and human body can be sampled or estimated using Skinned Multi-Person Linear (SMPL) based parametric human model. The SMPL model is a skinned vertex-based model (or also referred as realistic three-dimensional (3D) model) that accurately represents a wide variety of body shapes in natural human poses. The parameters of the model are learned from data including the rest pose template, blend weights, pose-dependent blend shapes, identity-dependent blend shapes, and a regressor from vertices to joint locations. The expression "rest pose template" refers to a position of a human subject in T-pose. For a given vertex, the expression "blend weight(s)" refers to a set of weights corresponding to (or associated with) each body joint of the human subject for computing final transformation matrix. The expression "pose-dependent blend shapes" refers to a deformation caused by body pose parameters. The expression "identity-dependent blend shapes" refers to a deformation caused by body shape parameters. The expression 'regressor' refers to a learning function that maps human body vertices to body joints. For further information on the above parameters such as refer "Loper, M., Mahmood, N., Romero, J., Pons-Moll, G., Black, M.J.: SMPL: A skinned multi-person linear model. ACM transactions on graphics (TOG) 34(6), 1-16 (2015)".

At step 204 of the method of the present disclosure, the one or more hardware processors 104 generate, via a first set of plurality of encoders, a plurality of garment aware node features ( 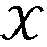 ) based on the garment template. In the present disclosure, the plurality of garment aware node features ( 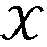 ) refer to features in a latent space representation that capture garment geometry, fabric property, and garment deformation prior. In the present disclosure, the system 100 and the one or more hardware processors 104 obtain the plurality of garment aware node features ( 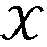 ) by generating, by using a first encoder amongst the first set of plurality of encoders, a plurality of high-dimensional per-vertex garment geometric features (*X^{gar}*) based on the garment template. In the present disclosure, the plurality of high-dimensional per-vertex garment geometric features (*X^{gar}*) refer to features in the latent space representation that capture the garment geometry. Further, by using a second encoder amongst the first set of plurality of encoders the plurality of high-dimensional per-vertex garment geometric features (*X^{gar}*), a fabric specific data associated (*f*) with the garment template, and relative positions of a plurality of garment vertices (*p*, *p^{prior}*) comprised in the garment template are concatenated to obtain the plurality of garment aware node features ( 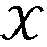 ). In the present disclosure, the fabric specific data associated (*f*) with the garment template refers to one-hot encoding of fabric. The above step 204 is better understood by way of following description:

The plurality of high-dimensional per-vertex garment geometric features (*X^{gar}*) are also referred as garment geometry and interchangeably used herein. The system 100 maps the garment vertices to a high-dimensional per-vertex geometric features using a geometry encoder (e.g., the first encoder) designed by taking inspiration from the PointNet++ (e.g., refer "Qi, C.R., Yi, L., Su, H., Guibas, L.J.: Pointnet++: Deep hierarchical feature learning on point sets in a metric space. Advances in neural information processing systems 30 (2017)"). *Relative Position of Garment*: Methods such as Bertiche, H. et al. used a 2-dimensional vector to denote the tightness of a garment. But it is difficult to obtain such a vector while testing on new garments. To alleviate this issue, the system and method described herein capture tightness at the vertex level by measuring the garment vertex's distance from the closest body vertex which can be computed for any garment during the test time. The relative position of a garment vertex *Gᵢ* with respect to the closest body vertex *B_{qi}* can be computed as *pᵢ = Gᵢ - B_{qi}.* Similarly, the system 100 can compute ${p}_{i}^{prior} = {G}_{i}^{prior} - {\overline{B}}_{{q}_{i}}$ *.* Here *qᵢ* is the index of the body vertex closest to the garment vertex *Gᵢ.* Throughout in the present disclosure, the system considers the subset of the human body denoted by a set of vertices *q =* {*q*₁, *q*₂, ... , *qᵢ,* ... *q_{Nn}*}. The reason behind this is, the deformation of a garment is affected by the geometry of all the body parts e.g., deformation of skirts will not be affected by the geometry of head, hand, shoulders, etc. The garment fabric (or also referred as the garment template) is encoded as a one-hot vector denoted by *f*. In the present disclosure, the following four fabrics were considered *leather, denim, silk, and cotton.* Such examples of fabrics shall not be considered as limiting the scope of the present disclosure. The system 100 passes the high-dimensional per-vertex garment geometric features (*X^{gar}*), the fabric (*f*), the relative position of garment (*p and p^{prior}*) vertices to an encoder wherein a concatenation of all these inputs is performed to obtain the garment aware node features (*χ*).

Referring to steps of FIG. 3, at step 206 of the method of the present disclosure, the one or more hardware processors 104 generate, via a second set of plurality of encoders, a plurality of body and motion aware node features (*µ*) based on the canonical body pose, and the target body pose. In the present disclosure, the plurality of body and motion aware node features (*µ*) refers to features in the latent space representation that capture underlying body geometry, underlying body semantic(s), relative body motion, and the like. The plurality of body and motion aware node features (*µ*) is obtained by generating, by using a first encoder amongst the second set of plurality of encoders from the plurality of encoders, a plurality of per-vertex body geometric features (*X^{body}*) based on a garment portion comprised in the canonical body pose. Further, a second encoder amongst the second set of plurality of encoders is invoked by the system 100 to generate one or more garment aware body semantics (*S*) based on the canonical body pose. Furthermore, a third encoder amongst the second set of plurality of encoders is invoked by the system 100 to concatenate a plurality of relative motion vectors (*δ*), the one or more garment aware body semantics (*S*), and the plurality of per-vertex body geometric features (*X^{body}*) to obtain the plurality of body and motion aware node features (*µ*). The above step of 206 is better understood by way of following description:

Similar to the garment geometry, the system 100 encodes the geometry of the partial body represented by a subset of vertices in q using the same Pointnet++ based method used in garment geometry encoding. The system 100 computes the relative body motion between canonical and target body pose as a relative motion vectors of underlying body vertices as *δᵢ = B̅_{qi} - B_{qi}.* In other words, the plurality of relative motion vectors (*δ*) is between the canonical body pose and the target body pose. sGarment at the different parts of the body deforms differently. For instance, garments like a tube top and skirt having similar geometries deform differently as there are less articulated body parts under the tube top compared to the skirt. Hence, the system 100 conditions the garment deformation on the body semantics. The system and method obtain the body semantic vector S for each garment type, by passing a binary vector (1 indicates that it's index is the member of the set *q*) of dimension equal to the number of full-body vertices (in the case of present disclosure it was 6890 due to SMPL body model (e.g., refer "Loper, M., Mahmood, N., Romero, J., Pons-Moll, G., Black, M.J.: Smpl: A skinned multi-person linear model. ACM transactions on graphics (TOG) 34(6), 1-16 (2015)")) to an MLP and get encoded representation *S* as an output. This output is also referred as Garment Aware Body Semantic denoted by *S*. The system and method pass the concatenated per-vertex body geometric features (*X^{body}*), the relative motion (*δ*), the garment aware body semantic (S) to an encoder and get the body and motion aware node features (*µ*).

Referring to steps of FIG. 3, at step 208 of the method of the present disclosure, the one or more hardware processors 104 fuse the plurality of garment aware node features ( ) and the plurality of body and motion aware node features (*µ*) to obtain a set of fused node features (*η*). In the present disclosure, the fused node features (*η*) refers to features in the latent space representation that capture garment aware node feature(s) and body aware node feature. In other words, the system 100 and method obtain a final set of fused node features (*η*) by fusing the garment aware node feature *χᵢ* with the body aware node feature *µᵢ* fusion block which produces the fused node features *η* (refer node features fusion block in FIG. 2).

Referring to steps of FIG. 3, at step 210 of the method of the present disclosure, the one or more hardware processors 104 obtain a set of edge features (*π*) based on a plurality of relative positions of a plurality of edges comprised in the garment template (*ε*) and (*ε^{prior}*). For every edge, the edge feature are captured in *ε* for garment template and the edge feature are captured in *ε^{prior}* for garment deformation prior. The plurality of relative positions of the plurality of edges is denoted by (*ε*) and (*ε^{prior}*). The above step 210 is performed by an edge encoder depicted in FIG. 2. More specifically, the system 100 and method encode the relative positions of garment vertices of edges comprised in the garment template as the edge features of the garment graph/template. Let *Gⱼ* and *Gᵢ* be the end vertices of an edge of the garment graph. The system 100 and method of the present disclosure compute the relative position as *εᵢⱼ* = *Gⱼ - Gᵢ.* Similarly, the system 100 and method of the present disclosure also compute ${ε}_{ij}^{prior} = {G}_{j}^{prior} - {G}_{i}^{prior}$. The system 100 passes the concatenation of *εᵢⱼ* and ${ε}_{ij}^{prior}$ to an encoder (e.g., the edge encoder) to get encoded edge features *π* (also referred as the set of edge features (*π*) and interchangeably used herein). The garment graph with the learned node features *η* and the learned edge features *π* are then passed to the process step. The purpose of using both *εᵢⱼ* and ${ε}_{ij}^{prior}$ is to inform the network about the significant artifacts in the deformation prior, which can be perceived by the elongation of the edges captured in the ${ε}_{ij}^{prior}$. The length of an edge cannot be significantly different from its length in the template garment. The neural network (as depicted in FIG. 2 and comprised in, and implemented by the system 100) learns this concept from the concatenated *εᵢⱼ* and ${ε}_{ij}^{prior}$.

Referring to steps of FIG. 3, at step 212 of the method of the present disclosure, the one or more hardware processors 104 generate an encoded garment graph based on the set of fused node features (*η*) and the set of edge features (*π*). The system 100 and method combine the above factors and encode them as the node and the edge features of the garment graph/template. In other words, the encoding process involves generating an encoded output such as encoded garment graph comprising the set of fused node features (*η*) and the set of edge features (*π*).

At step 214 of the method of the present disclosure, the one or more hardware processors 104 process the encoded garment graph to obtain a processed encoded garment graph with an updated set of edge features and an updated set of node features. The above step 214 comprising the processing of the encoded garment graph is better understood by way of following description:

In step 214, the system 100 and method of the present disclosure impose strong relational inductive bias by processing the encoded garment graph through a message-passing network as depicted in FIG. 2 by way of process block. The aim of the process step or the process block is to learn the relation of the garment deformation with respect to the body motion, distance of the garment vertices from the body vertices and the local spatial connectivity among the garment vertices. The system 100 and method implement message-passing network using the abstract framework of Graph Network block (e.g., refer "Battaglia, P.W. et al."), with two update and one aggregation functions. Steps carried out in the processing step 214 is shown in 'Algorithm 1' (also referred as 'pseudo code 1' and interchangeably used herein) below by way of non-limiting example:

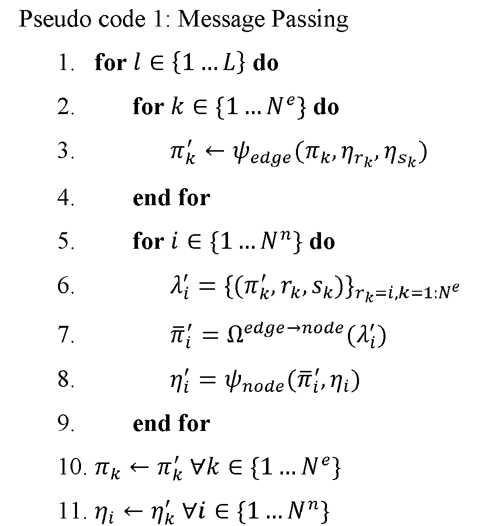

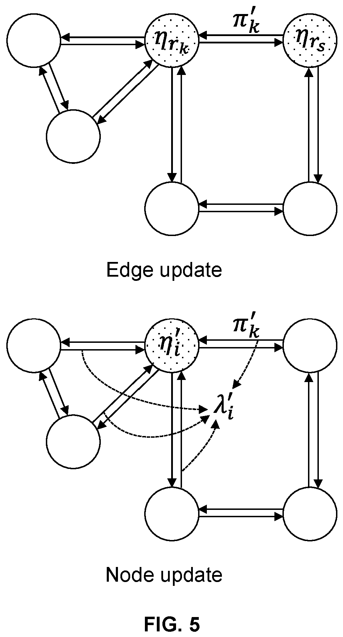

The update function *ψ_{edge}* is applied per-edge (Algorithm 1, line 3). It takes the edge feature *πₖ*, the node features of the nodes connecting the *kth* edge (*ηᵣₖ* and *ηₛₖ*) and produces the updated edge feature ${π}_{k}^{′}$ (visually depicted in FIG. 5). More specifically, FIG. 5, with reference to FIGS. 1 through 4, depicts an exemplary message passing method to obtain the updated set of edge features and the updated set of node features, in accordance with an embodiment of the present disclosure. The system 100 and method of the present disclosure accumulate the updated edge features along with the indices of the edge end nodes in ${λ}_{i}^{′} = {\left\{\left({π}_{k}^{′}, {r}_{k}, {s}_{k}\right)\right\}}_{{r}_{k} = i , k = 1 : {N}^{e}}$ (Algorithm 1, line 6). The aggregation function Ω^{*edge*→*node*} is applied to ${λ}_{i}^{′}$ to aggregate the updated edge features for the edges connected to the *ith* node into the ${\overline{π}}_{i}^{′}$ (Algorithm 1, line 7). The update function *ψ_{node}* is applied per-node (Algorithm 1, line 8) where it takes the aggregated edge features ${\overline{π}}_{i}^{′}$, its own node features and produce the updated node feature ${η}_{k}^{′}$ (visually depicted in FIG. 5). The process repeats *L* times (*L* = 5 in the experiments conducted by the system and method of the present disclosure) and then the next message passing takes the updated node and edge features (Algorithm 1, lines 10-11). The update functions *ψ_{edge}* and *ψ_{node}* are implemented using MLP's. The aggregation function Ω^{*edge*→*node*} is an average function.

At step 216 of the method of the present disclosure, the one or more hardware processors 104 predict, by using a dynamics decoder, a simulated garment on the target body pose based on the processed encoded garment graph with the updated set of edge features and the updated set of node features. The above step 216 is better understood by way of following description:

The decoding step takes the processed encoded garment graph node features and for each vertex the dynamics decoder predicts the direction ${v}_{i}^{pred}$ and magnitude ${m}_{i}^{pred}$ of the motion. The position of the *ith* garment vertex can be computed by putting ${v}_{i}^{pred}$ and ${m}_{i}^{pred}$ in the equation (2). In other words, the process of predicting by the decoder includes outputting the simulated garment which comprises information on velocity at each vertex of the processed encoded garment graph. The velocity at each vertex of the processed encoded garment graph comprises direction and magnitude of motion of the garment template (refer equation (2), in an embodiment of the present disclosure.

The system 100 and method of the present disclosure were trained on multi garment types. In one embodiment, unlike the constraint in existing research works and approaches wherein training is done only on a specific garment type at a given point of time, the system and method of the present disclosure can get trained simultaneously on multi garment types. During the training, there were training losses which have been categorized. Below description is provided and illustrated by the system and method of the present disclosure that indicate the training losses identified and categorized accordingly.

### Training Losses

The system and method divide the losses into supervised and unsupervised categories.

**Supervised Loss:** While it is tempting to directly apply *L*2 loss on the predicted direction and the magnitude of the motion, the system and method found it giving unfavorable results. Instead, the system and method apply *L*2 loss on the predicted vertex positions ${\overline{G}}_{i}^{pred}$*.* The system and method show a detailed ablation study on this choice along with other possible choices. A set of template garment vertices were captured in an index vector 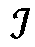 of size equal to the total number of vertices/nodes *Nⁿ.* These are the vertices that need to be pinned and should not move too far from the body. 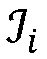 = 1 indicates the *ith* template garment vertex needs to be pinned. The system and method have split the total L2 loss for pinned and non-pinned vertices as: ${L}_{L 2} = {J}_{i} \left(1-β\right) \times \frac{1}{{N}^{n} - \left|J\right|} {\sum }_{i = 1}^{{N}^{n}} {J}_{i} {\left‖{\overline{G}}_{i}-{\overline{G}}_{i}^{pred}\right‖}_{2} + β \times \frac{1}{\left|J\right|} {\sum }_{i = 1}^{\left|J\right|} {J}_{i} {\left‖{\overline{G}}_{i}-{\overline{G}}_{i}^{pred}\right‖}_{2}$

Here, | | denotes the total number of pinned vertices, and *β* balances the weight between pinned and non-pinned losses. The system and method empirically fixed *β* = 0.4.

**Unsupervised Losses:** *Mesh Smoothing Loss:* The system and method used this loss to enforce smoothness on the surface of the predicted garment mesh *G̅^{pred}.* The system and method used uniform Laplacian smoothing loss (e.g., refer "Nealen, A., Igarashi, T., Sorkine, O., Alexa, M.: Laplacian mesh optimization. In: Proceedings of the 4th international conference on Computer graphics and interactive techniques in Australasia and Southeast Asia. pp. 381-389 (2006)") to enforce the smoothing constraint. Here, *Δ* denotes the Laplacian smoothing function: ${L}_{Smooth} = Δ {\overline{G}}^{pred}$

*Mesh Normal Consistency Loss:* This loss enforces the consistency between the neighboring faces of the predicted garment mesh to prevent the extreme deformations and improve quality of garment mesh surface. This also assists in smoothing the surface along with the Laplacian surface smoothing loss. Assuming *F*₁ and *F*₂ are the two adjacent faces of the garment mesh such that they share one common edge between them, and *N*₁ and *N*₂ as their respective face normal. The normal consistency loss between these two faces is given by $NC \left({F}_{1}, {F}_{2}\right) = 1 - \frac{{N}_{1} {N}_{2}}{\left‖{N}_{1}\right‖ \left‖{N}_{2}\right‖}$. The total consistency loss is computed as in equation (5), where 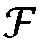 is a set containing all possible neighboring face pairs and *N^{b}* is the number of such pairs. ${L}_{NC} = \frac{1}{{N}^{b}} {\sum }_{∀ \left({F}_{i}, {F}_{j}\right)} NC \left({F}_{i}, {F}_{j}\right)$

*Body Garment Collision Penalty Loss:* To ensure predicted garment mesh is free from body garment collision the system 100 applies this penalty loss. In the present disclosure, the one or more hardware processors 104 apply the body garment penalty loss on predicted garment (or also referred as simulated garment) to remove collision of the predicted garment on the target body pose. To compute this penalty loss, the system 100 and method first found for each predicted garment vertex ${\overline{G}}_{j}^{pred}$ the closest body vertex *B̅ᵢ* and estimated its normal 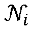 . The total collision penalty loss can be computed as: ${L}_{collision} = \frac{1}{{N}^{n}} {\sum }_{i = 1}^{{N}^{n}} max \left(-{N}_{i}\left({\overline{B}}_{i}-{\overline{G}}_{j}^{pred}\right),ϵ\right)$

In the case of the present disclosure and experiments conducted therein, this reduced total collisions from ~11% to ~0% during training.

The total training loss is the weighted sum of the supervised and unsupervised losses. Here, *α* denote the weights of the respective losses. ${L}_{Total} = {α}_{L 2} {L}_{L 2} + {α}_{smooth} {L}_{Smooth} + {α}_{NC} {L}_{NC} + {α}_{collision} {L}_{collision}$

### Experiments

The system 100 and method of the present disclosure discuss quantitative and qualitative results of method of the present disclosure and compare with the state-of-the-arts methods.

**Dataset:** The system evaluated method of the present disclosure on a subset of training and test set of publicly available CLOTH3D dataset (e.g., refer "Bertiche, H., Madadi, M., Escalera, S.: Cloth3d: clothed 3d humans. In: European Conference on Computer Vision. pp. 344-359. Springer (2020)"). The system 100 selected sequences with at-least 50 frames where a female is wearing a skirt and a top. The training and test subset consisted of 38k and 10k frames of skirts and tops simulated in four different fabrics, *leather, denim, cotton, and the silk.* While training the method and system 100 of the present disclosure, the system 100 reduced the mesh resolution by simplifying the meshes with a factor of ~4 retaining the overall garment geometry. However, the system and method show evaluations on both the low and the original resolutions.

Implementation Details: The system 100 implemented the method of FIG. 3 using PyTorch (e.g., refer "https://pytorch.org/"), Pytorch-Geometric (e.g., refer "https://pytorch-geometric.readthedocs. io/"), and PyTorch3D (e.g., refer "https://pytorch3d.readthedocs.io/"). The system 100 applied 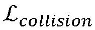 only after other losses converge. The system 100 also empirically fixed *α_{L2}* and *α_{collision}* equal to 1, *αₛₘₒₒₜₕ* = 1*e*2 and *α_{NC}* = 1*e*4.

Evaluation Metrics: The system 100 and method of the present disclosure used four types of quantitative evaluation metrics, namely (a) Euclidean Error against the ground-truth, (b) Surface smoothness, (c) Normal consistency, and (d) Collision percentage. For smoothness and normal consistency score, the system 100 used the equations (4) and (5), respectively.

The system 100 first shows qualitative results on unseen body poses and garment types (T-shirt and trousers). Next, the system 100 shows fabric aware predictions and evaluation followed by an ablation on alternate design choices. Quantitative and qualitative results of the method of the present disclosure on the test set and comparison with the conventional DeePSD is also shown herein. For all these evaluations, DeePSD was trained and evaluated on the original resolution meshes using their available code (e.g., refer "https://github.com/hbertiche/DeePSD"). Finally, the system 100 presents a qualitative comparison of the method of the present disclosure with the conventional methods such as PBNS, TailorNet and DeepDraper for which a fair quantitative comparison with the method of the present disclosure is infeasible due to their design choices or input requirements.

### Evaluation on Unseen Poses and Garment Types:

Qualitative results of the method of the present disclosure were also observed on unseen poses and cloth type (not shown in FIGS. for the sake of brevity). The system 100 selected a few frames from random YouTube^{®} videos and estimated the body shape and pose using PARE (e.g., refer "Kocabas, M., Huang, C.H.P., Hilliges, O., Black, M.J.: Pare: Part attention regressor for 3D human body estimation. In: Proceedings of the IEEE/CVF International Conference on Computer Vision. pp. 11127-11137 (2021)"). Results of the method of the present disclosure were produced for the skirt and top on unseen body poses. The system 100 observed results on unseen garment types T-shirts and trousers which are not present in the training set. These results on the unseen garment types indicated that the method of the present disclosure accurately learnt the vertex level dynamics and hence the method described herein is able to produce quite satisfactory results for them.

### Fabric Aware Predictions:

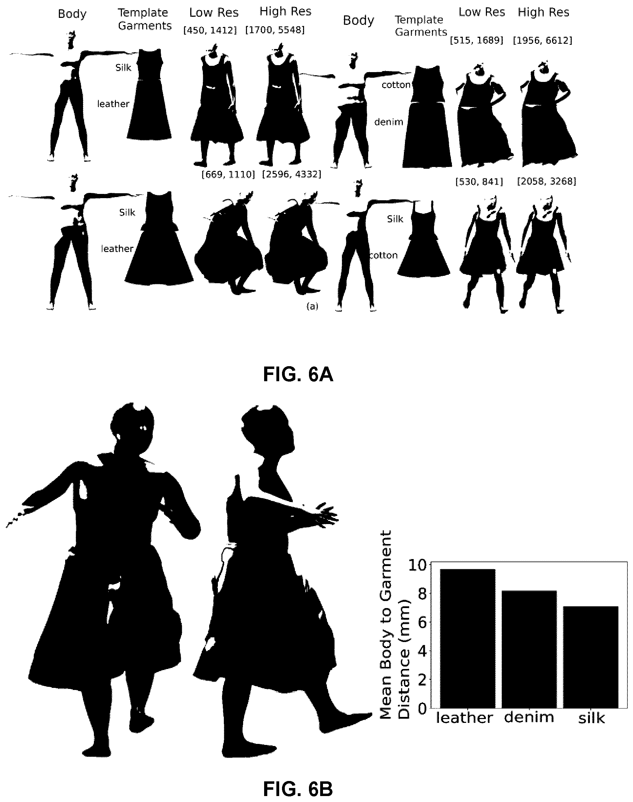

The system 100 evaluated the method of the present disclosure for the fabric-aware garment deformation. The system 100 selected a subset of 3000 frames of the skirts from the test set and simulate them in three significantly different fabric types of *leather, denim, and silk.* To analyze the influence of the different fabric types on garment deformation quantitatively, the system 100 computed the mean distance of all the garment vertices to their respective closest body vertices. FIG. 6A, with reference to FIGS. 1 through 5, depicts sample qualitative results of the method of FIG. 3, in accordance with an embodiment of the present disclosure. Alignment of the garments on the body due to motion, and the wrinkles and folds in the skirts around the legs have been observed by the system in FIG. 6A. Fabrics based on their stiffness can be ordered as *leather* > *denim* > *silk* and intuitively it is expected that the mean garment to body distance should also follow this order. The chart in FIG. 6B empirically verifies this order. More specifically, FIG. 6B, with reference to FIGS. 1 through 6A, depicts a result on fabric aware simulations, in accordance with an embodiment of the present disclosure. Visual results of the leather and the silk simulation of a skirt (e.g., different color codes such as green and orange, respectively may be used - not shown in FIGS.) are also shown in FIG. 6B.

### Ablation Study

The system 100 shows a comparison with two alternate modeling choices. While the system 100 predicts the magnitude and direction of the motion for each vertex separately, there exist two alternate choices. First is a direct prediction of the velocity of the vertex from the decoder and second is the direct prediction of the vertex positions by applying *L*2 loss with the ground-truth data. Table 1 shows the evaluations of these two alternate choices. More specifically, Table 1 illustrates ablation study on Alternate Choices, wherein metric is average of both tops and skirts results for the low-resolution simulation. It was found that predicting magnitude and direction gives better results than the other choices.

**Table 1**

| | Direction + Magnitude | Direct Velocity | Direct Vertex Positions |
|---|---|---|---|
| Euclidean Error (mm) | 40.01 | 45.695 | 64.695 |
| Normal Consistency | 0.08 | 0.09565 | 0.10165 |
| Smoothness | 0.01125 | 0.01225 | 0.03225 |
| Collision (%) | 2.35 | 4.9 | 10.9 |

### Evaluation on the Test Set

Quantitative: The system 100 reports the quantitative performance of both the method of the present disclosure and the DeePSD (conventional method) on the test set in Table 2. More specifically, Table 2 illustrates quantitative results on Test Set.

**Table 2**

| | Low-resolution Tops | Skirts | Low-resolution (x4) Tops | | High-resolution (x4) Tops | |
|---|---|---|---|---|---|---|
| | Method of the present disclosure | | Method of the present disclosure | DeePSD | Method of the present disclosure | DeePSD |
| Euclidean Error (mm) | 21.75 | 58.27 | 18.29 | 39.63 | 56.47 | 77.41 |
| Normal Consistency | 0.073 | 0.087 | 0.055 | 0.1378 | 0.074 | 0.1399 |
| Smoothness | 0.0112 | 0.0113 | 0.0026 | 0.0032 | 0.0039 | 0.0042 |
| Collision (%) | 2.1 | 2.6 | 1.7 | 19.77 | 1.2 | 10.15 |

While the method of the present disclosure was trained on low-resolution garment meshes, the system 100 evaluated the method of the present disclosure on both low and high resolutions. The results showed the method of the present disclosure being trained on low-resolution meshes outperformed DeePSD significantly in all metrics which is trained on the high-resolution meshes. The result further showed that the particle-based vertex level modeling of garments along with strong relational inductive bias through learned message-passing network (e.g., the method of the present disclosure) helps learn garment dynamics independent of the mesh resolution. It was also observed that reducing garment mesh resolution too much degrades the performance, as the high-frequency information is lost. The system 100 empirically found that reducing by a factor of 4 does not affect the performance of the method of the present disclosure.

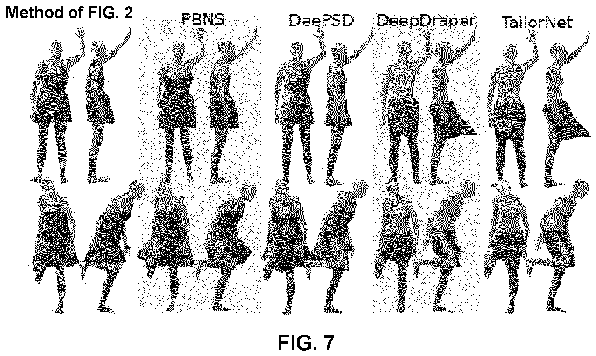

DeePSD applied physics aware losses with L2 loss on the data being the primary loss with a hope that the network learns the physics of garment deformation. However, the quantitative result in Table 2 and qualitative in FIG. 7 show that conventional method - DeePSD does not accurately learn the physics of the deformation. More specifically, FIG. 7, with reference to FIGS. 1 through 6B, depicts a qualitative comparison of the results of the method of FIG. 3 with conventional approaches (e.g., PBNS, DeePSD, DeepDraper, and TailorNet), in accordance with an embodiment of the present disclosure. The non-smooth surface, floating straps and collisions in the PBNS and DeePSD have been observed by the system 100 in FIG. 7. Further, the quantitative results (e.g., 41.15 mm mean error for skirts) reported in the DeepPSD method used the complete CLOTH3D training set which contained ~2 millions of frames as compared to the ~38k training frames used by the system and method of the present disclosure. This demonstrated that DeePSD requires a huge amount of training data to get good results. Qualitative: The system 100 qualitatively evaluated the method of the present disclosure on varying body shapes and pose, and cloth fabrics as shown in FIG. 6A. The inference time of the method of the present disclosure for the garments with total vertices 600 and 2400 has been 0.1 and 1.0 seconds, respectively, which can further be reduced by optimizing the code and paralleling the encoding process.

### Qualitative Comparisons with the Related Works

The system 100 compared the method of the present disclosure qualitatively with conventional methods such as DeePSD, PBNS, TailorNet and DeepDraper.

With PBNS and DeePSD: The PBNS learnt subject and garment specific pose aware deformation. Hence, a fair comparison would not be possible. The pre-trained models of DeepPSD and PBNS were also not available. However, for a reference qualitative comparison, the system 100 picked one subject and a skirt (loose garment) from the Cloth3D test set with a random set of 1000 significantly different poses and trained PBNS using conventionally available code (e.g., refer "https://github.com/hbertiche/PBNS"). The system 100 tested it on two arbitrary selected poses in FIG. 6. In FIG. 6, it can be observed that the cloth quality predicted by PBNS is not good (irregular mesh surface). In PBNS and DeePSD results, the straps are floating in the air, and garments are colliding with the body, while method of the present disclosure produced significantly better pose aware deformations wherein straps are resting on the body.

With TailorNet and DeepDraper: A fair comparison with both TailorNet and DeepDraper is infeasible due to the following reasons. 1) Both are single garment type methods, while method of the present disclosure learns for multiple garment types at a time. 2) They assume fixed vertex order and topology, while the method of the present disclosure assumed arbitrary vertex order and topologies. Also, adapting their methods for the CLOTH3D dataset is infeasible due to their design choices (e.g., fixed 20 shape-style aware predictors in TailorNet). The system of the present disclosure still shows a reference qualitative comparison with TailorNet and the DeepDraper as follows: The system 100 trained the Tailor-Net using their code3 on the TailorNet Skirt dataset (e.g., refer "https://github.com/zycliao/TailorNetdataset"), and since DeepDraper also follows the same representations, the system 100 train it on the same training set. While training DeepDraper the system 100 followed the skirt modeling strategy as suggested by the TailorNet. At test time, the system 100 found Skirts from the TailorNet test set are similar to the Skirts used for the method of the present disclosure, and the system 100 evaluated on the same using the test poses. For a fair comparison, the system 100 shows the results of both the TailorNet and the DeepDraper before post-processing in FIG. 7. More specifically, FIG. 7, with reference to FIGS. 1 through 6B, depicts qualitative comparison of the method of the present disclosure with conventional methods, in accordance with an embodiment of the present disclosure.

The system of the present disclosure implemented a particle-based garment simulation method for body pose and fabric-aware simulation of garments. The system and method overcome several limitations of the state-of-the-art methods such as handling garments with a varying number of vertices and topologies, fabrics, loose garment types, body shapes, and poses. The system and method also showed the benefit of leveraging the relational nature of garment data while training via the experimental results and studies. The significantly improved results compared to the other state-of-the-art methods have supported the method described herein. The system of the present disclosure also showed that the method described herein learns the fabric aware and pose aware dynamics of the garment. It is to be understood by a person having ordinary skill in the art or person skilled in the art that though the method of the present disclosure was implemented and experimented for a select set of fabric/garment, such examples shall not be construed as limiting the scope of the present disclosure. In other words, the system and method of the present disclosure can also be implemented for (i) dynamics (or velocity) prediction, (ii) handling multi-garments, and other accessories (or articles) for example, but are not limited to, hat, shoes, gloves, and the like. Since method of the present disclosure fundamentally learns the physical dynamics of the garment vertices conditioned on underlying body motion and fabric properties, the system and method can be trained with multiple garments simultaneously. Experimental results showed that the method of the present disclosure with less amount of training data not only outperformed the SOTA methods on challenging CLOTH3D dataset both qualitatively and quantitatively, but also worked reliably well on the unseen poses obtained from YouTube^{®} videos and gave satisfactory results (not shown in FIGS.) on unseen cloth types which were not present during the training.

It is to be understood and noted by a person having ordinary skill in the art or person skilled in the art that the simulation method and system as described herein have generated simulated output(s) at various stages of encoder(s), process(ing) block, and decoders which resulted in simulated image(s). Transformation of the simulated image(s) or simulation outputs to Black and White line diagrams may be challenging and out of the scope. The simulated outputs have been converted to Black and White images and presented in the form of solid objects as depicted in FIGS. and described herein.

The written description describes the subject matter herein to enable any person skilled in the art to make and use the embodiments. The scope of the subject matter embodiments is defined by the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method comprising:
obtaining, via one or more hardware processors, an input data comprising a garment template draped on a canonical body pose, and a target body pose (202);
generating, by using via a first set of plurality of encoders via the one or more hardware processors, a plurality of garment aware node features ( 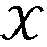 ) based on the garment template (204);
generating, by using a second set of plurality of encoders via the one or more hardware processors, a plurality of body and motion aware node features *(µ)* based on the canonical body pose, and the target body pose (206);
fusing, via the one or more hardware processors, the plurality of garment aware node features ( 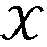 ) and the plurality of body and motion aware node features (*µ*) to obtain a set of fused node features (*η*) (208);
obtaining, via the one or more hardware processors, a set of edge features (*π*) based on a plurality of relative positions (*ε, ε^{prior}*) of a plurality of edges comprised in the garment template (210);
generating, via the one or more hardware processors, an encoded garment graph based on the set of fused node features (*η*) and the set of edge features (*π*) (212);
processing, via the one or more hardware processors, the encoded garment graph to obtain a processed encoded garment graph with an updated set of edge features and an updated set of node features (214); and
predicting, by using a dynamics decoder via the one or more hardware processors, a simulated garment on the target body pose based on the processed encoded garment graph with the updated set of edge features and the updated set of node features (216).

2. The processor implemented method of claim 1, wherein the plurality of garment aware node features ( 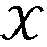 ) is obtained by:
generating, by using a first encoder amongst the first set of plurality of encoders via the one or more hardware processors, a plurality of high-dimensional per-vertex garment geometric features (*X^{gar}*) based on the garment template; and
concatenating, by using a second encoder amongst the first set of plurality of encoders via the one or more hardware processors, the plurality of high-dimensional per-vertex garment geometric features (*X^{gar}*), a fabric specific data associated (*f*) with the garment template, and a relative position of a plurality of garment vertices *(p, p^{prior}*) comprised in the garment template to obtain the plurality of garment aware node features ( 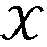 ).

3. The processor implemented method of claim 1, wherein the plurality of body and motion aware node features *(µ)* is obtained by:
generating, by using a first encoder amongst the second set of plurality of encoders via the one or more hardware processors, a plurality of per-vertex body geometric features (*X^{body}*) based on a garment portion comprised in the canonical body pose;
generating, by using a second encoder amongst the second set of plurality of encoders via the one or more hardware processors, one or more garment aware body semantics (*S*) based on the canonical body pose; and
concatenating, by using a third encoder amongst the second set of plurality of encoders via the one or more hardware processors, a plurality of relative motion vectors (*δ*), the one or more garment aware body semantics (*S*), and the plurality of per-vertex body geometric features (*X^{body}*) to obtain the plurality of body and motion aware node features (*µ*).

4. The processor implemented method of claim 1, wherein the simulated garment comprises information on velocity at each vertex of the processed encoded garment graph.

5. The processor implemented method of claim 4, wherein the velocity at each vertex of the processed encoded garment graph comprises direction and magnitude of motion of the garment template.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
obtain an input data comprising a garment template draped on a canonical body pose, and a target body pose;
generate, via a first set of plurality of encoders, a plurality of garment aware node features ( 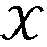 ) based on the garment template;
generate, via a second set of plurality of encoders, a plurality of body and motion aware node features (*µ*) based on the canonical body pose, and the target body pose;
fuse the plurality of garment aware node features ( 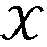 ) and the plurality of body and motion aware node features (*µ*) to obtain a set of fused node features (*η*);
obtain a set of edge features (*π*) based on a plurality of relative positions (*ε*, *ε^{prior}*) of a plurality of edges comprised in the garment template;
generate an encoded garment graph based on the set of fused node features (*η*) and the set of edge features (*π*);
process the encoded garment graph to obtain a processed encoded garment graph with an updated set of edge features and an updated set of node features; and
predict, by using a dynamics decoder, a simulated garment on the target body pose based on the processed encoded garment graph with the updated set of edge features and the updated set of node features.

7. The system of claim 6, wherein the plurality of garment aware node features ( 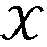 ) is obtained by:
generating, by using a first encoder amongst the first set of plurality of encoders, a plurality of high-dimensional per-vertex garment geometric features (*X^{gar}*) based on the garment template; and
concatenating, by using a second encoder amongst the first set of plurality of encoders, the plurality of high-dimensional per-vertex garment geometric features (*X^{gar}*), a fabric specific data associated (*f*) with the garment template, and a relative position of a plurality of garment vertices (*p*, *p^{prior}*) comprised in the garment template to obtain the plurality of garment aware node features (X).

8. The system of claim 6, wherein the plurality of body and motion aware node features (*µ*) is obtained by:
generating, by using a first encoder amongst the second set of plurality of encoders, a plurality of per-vertex body geometric features (*X^{body}*) based on a garment portion comprised in the canonical body pose;
generating, by using a second encoder amongst the second set of plurality of encoders, one or more garment aware body semantics (*S*) based on the canonical body pose; and
concatenating, by using a third encoder amongst the second set of plurality of encoders, a plurality of relative motion vectors (*δ*), the one or more garment aware body semantics (*S*), and the plurality of per-vertex body geometric features (*X^{body}*) to obtain the plurality of body and motion aware node features (*µ*).

9. The system of claim 6, wherein the simulated garment comprises information on velocity at each vertex of the processed encoded garment graph.

10. The system of claim 9, wherein the velocity at each vertex of the processed encoded garment graph comprises direction and magnitude of motion of the garment template.

11. One or more non-transitory machine-readable information storage mediums comprising one or more instructions which when executed by one or more hardware processors cause:
obtaining, an input data comprising a garment template draped on a canonical body pose, and a target body pose;
generating, by using via a first set of plurality of encoders, a plurality of garment aware node features ( 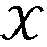 ) based on the garment template;
generating, by using a second set of plurality of encoders, a plurality of body and motion aware node features (*µ*) based on the canonical body pose, and the target body pose;
fusing the plurality of garment aware node features ( 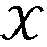 ) and the plurality of body and motion aware node features (*µ*) to obtain a set of fused node features (*η*);
obtaining a set of edge features (*π*) based on a plurality of relative positions (*ε, ε^{prior}*) of a plurality of edges comprised in the garment template;
generating an encoded garment graph based on the set of fused node features (*η*) and the set of edge features (*π*);
processing the encoded garment graph to obtain a processed encoded garment graph with an updated set of edge features and an updated set of node features; and
predicting, by using a dynamics decoder, a simulated garment on the target body pose based on the processed encoded garment graph with the updated set of edge features and the updated set of node features.

12. The one or more non-transitory machine-readable information storage mediums of claim 11, wherein the plurality of garment aware node features ( 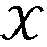 ) is obtained by:
generating, by using a first encoder amongst the first set of plurality of encoders, a plurality of high-dimensional per-vertex garment geometric features (*X^{gar}*) based on the garment template; and
concatenating, by using a second encoder amongst the first set of plurality of encoders, the plurality of high-dimensional per-vertex garment geometric features (*X^{gar}*), a fabric specific data associated (*f*) with the garment template, and a relative position of a plurality of garment vertices (*p*, *p^{prior}*) comprised in the garment template to obtain the plurality of garment aware node features (X).

13. The one or more non-transitory machine-readable information storage mediums of claim 11, wherein the plurality of body and motion aware node features (*µ*) is obtained by:
generating, by using a first encoder amongst the second set of plurality of encoders, a plurality of per-vertex body geometric features (*X^{body}*) based on a garment portion comprised in the canonical body pose;
generating, by using a second encoder amongst the second set of plurality of encoders, one or more garment aware body semantics (*S*) based on the canonical body pose; and
concatenating, by using a third encoder amongst the second set of plurality of encoders, a plurality of relative motion vectors (*δ*), the one or more garment aware body semantics (S), and the plurality of per-vertex body geometric features (*X^{body}*) to obtain the plurality of body and motion aware node features (*µ*).

14. The one or more non-transitory machine-readable information storage mediums of claim 11, wherein the simulated garment comprises information on velocity at each vertex of the processed encoded garment graph.

15. The one or more non-transitory machine-readable information storage mediums of claim 14, wherein the velocity at each vertex of the processed encoded garment graph comprises direction and magnitude of motion of the garment template.

## Patentansprüche

1. Prozessorimplementiertes Verfahren, umfassend:
Erhalten, über einen oder mehrere Hardwareprozessoren, von Eingabedaten, die eine Kleidungsstückvorlage, die auf eine kanonische Körperpose drapiert ist, und eine Zielkörperpose (202) umfassen;
Erzeugen, unter Verwendung über einen ersten Satz einer Mehrzahl von Codierern über den einen oder die mehreren Hardwareprozessoren, einer Mehrzahl von kleidungsstückbewussten Knotenmerkmalen ( 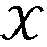 ) basierend auf der Kleidungsstückvorlage (204);
Erzeugen, unter Verwendung eines zweiten Satzes einer Mehrzahl von Codierern über den einen oder die mehreren Hardwareprozessoren, einer Mehrzahl von körper- und bewegungsbewussten Knotenmerkmalen (*µ*) basierend auf der kanonischen Körperpose und der Zielkörperpose (206);
Verschmelzen, über den einen oder die mehreren Hardwareprozessoren, der Mehrzahl von kleidungsstückbewussten Knotenmerkmalen ( 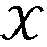 ) und der Mehrzahl von körper- und bewegungsbewussten Knotenmerkmalen (*µ*), um einen Satz von verschmolzenen Knotenmerkmalen (*η*) (208) zu erhalten;
Erhalten, über den einen oder die mehreren Hardwareprozessoren, eines Satzes von Kantenmerkmalen (*π*) basierend auf einer Mehrzahl von relativen Positionen (*ε*, *ε^{vorher}*) einer Mehrzahl von Kanten, die in der Kleidungsstückvorlage (210) enthalten sind;
Erzeugen, über den einen oder die mehreren Hardwareprozessoren, eines codierten Kleidungsstückgraphen basierend auf dem Satz von verschmolzenen Knotenmerkmalen (*η*) und dem Satz von Kantenmerkmalen (*π*) (212);
Verarbeiten, über den einen oder die mehreren Hardwareprozessoren, des codierten Kleidungsstückgraphen, um einen verarbeiteten codierten Kleidungsstückgraphen mit einem aktualisierten Satz von Kantenmerkmalen und einem aktualisierten Satz von Knotenmerkmalen (214) zu erhalten; und
Vorhersagen, unter Verwendung eines Dynamikdecodierers über den einen oder die mehreren Hardwareprozessoren, eines simulierten Kleidungsstücks auf der Zielkörperpose basierend auf dem verarbeiteten codierten Kleidungsstückgraphen mit dem aktualisierten Satz von Kantenmerkmalen und dem aktualisierten Satz von Knotenmerkmalen (216).

2. Prozessorimplementiertes Verfahren nach Anspruch 1, wobei die Mehrzahl von kleidungsstückbewussten Knotenmerkmalen (X) erhalten wird durch:
Erzeugen, unter Verwendung eines ersten Codierers aus dem ersten Satz einer Mehrzahl von Codierern über den einen oder die mehreren Hardwareprozessoren, einer Mehrzahl von hochdimensionalen geometrischen Kleidungsstückmerkmalen pro Scheitelpunkt (*X^{gar}*) basierend auf der Kleidungsstückvorlage; und
Verketten, unter Verwendung eines zweiten Codierers aus dem ersten Satz einer Mehrzahl von Codierern über den einen oder die mehreren Hardwareprozessoren, der Mehrzahl von hochdimensionalen geometrischen Kleidungsstückmerkmalen pro Scheitelpunkt (*X^{gar}*), von gewebespezifischen Daten, die (*f*) mit der Kleidungsstückvorlage assoziiert sind, und einer relativen Position einer Mehrzahl von Kleidungsstückscheitelpunkten (*p*, *p^{vorher}*), die in der Kleidungsstückvorlage enthalten sind, um die Mehrzahl von kleidungsstückbewussten Knotenmerkmalen ( 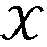 ) zu erhalten.

3. Prozessorimplementiertes Verfahren nach Anspruch 1, wobei die Mehrzahl von körper- und bewegungsbewussten Knotenmerkmalen (*µ*) erhalten wird durch:
Erzeugen, unter Verwendung eines ersten Codierers aus dem zweiten Satz einer Mehrzahl von Codierern über den einen oder die mehreren Hardwareprozessoren, einer Mehrzahl von geometrischen Körpermerkmalen pro Scheitelpunkt (*X^{körper}*) basierend auf einem Kleidungsstückabschnitt, der in der kanonischen Körperpose enthalten ist;
Erzeugen, unter Verwendung eines zweiten Codierers aus dem zweiten Satz einer Mehrzahl von Codierern über den einen oder die mehreren Hardwareprozessoren, einer oder mehrerer kleidungsstückbewusster Körpersemantiken (*S*) basierend auf der kanonischen Körperpose; und
Verketten, unter Verwendung eines dritten Codierers aus dem zweiten Satz einer Mehrzahl von Codierern über den einen oder die mehreren Hardwareprozessoren, einer Mehrzahl von relativen Bewegungsvektoren (*δ*), der einen oder der mehreren kleidungsstückbewussten Körpersemantiken (*S*) und der Mehrzahl von geometrischen Körpermerkmalen pro Scheitelpunkt (*X^{körper}*), um die Mehrzahl von körper- und bewegungsbewussten Knotenmerkmalen (*µ*) zu erhalten.

4. Prozessorimplementiertes Verfahren nach Anspruch 1, wobei das simulierte Kleidungsstück Informationen über die Geschwindigkeit an jedem Scheitelpunkt des verarbeiteten codierten Kleidungsstückgraphen umfasst.

5. Prozessorimplementiertes Verfahren nach Anspruch 4, wobei die Geschwindigkeit an jedem Scheitelpunkt des verarbeiteten codierten Kleidungsstückgraphen die Richtung und Größe der Bewegung der Kleidungsstückvorlage umfasst.

6. System (100), umfassend:
einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:
Erhalten von Eingabedaten, die eine Kleidungsstückvorlage, die auf eine kanonische Körperpose drapiert ist, und eine Zielkörperpose umfassen;
Erzeugen, über einen ersten Satz einer Mehrzahl von Codierern, einer Mehrzahl von kleidungsstückbewussten Knotenmerkmalen ( 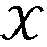 ) basierend auf der Kleidungsstückvorlage;
Erzeugen, über einen zweiten Satz einer Mehrzahl von Codierern, einer Mehrzahl von körper- und bewegungsbewussten Knotenmerkmalen (*µ*) basierend auf der kanonischen Körperpose und der Zielkörperpose;
Verschmelzen der Mehrzahl von kleidungsstückbewussten Knotenmerkmalen ( 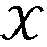 ) und der Mehrzahl von körper- und bewegungsbewussten Knotenmerkmalen (*µ*), um einen Satz von verschmolzenen Knotenmerkmalen (*η*) zu erhalten;
Erhalten eines Satzes von Kantenmerkmalen (*π*) basierend auf einer Mehrzahl von relativen Positionen (*ε*, *ε^{vorher}*) einer Mehrzahl von Kanten, die in der Kleidungsstückvorlage enthalten sind;
Erzeugen eines codierten Kleidungsstückgraphen basierend auf dem Satz von verschmolzenen Knotenmerkmalen (*η*) und dem Satz von Kantenmerkmalen (*π*);
Verarbeiten des codierten Kleidungsstückgraphen, um einen verarbeiteten codierten Kleidungsstückgraphen mit einem aktualisierten Satz von Kantenmerkmalen und einem aktualisierten Satz von Knotenmerkmalen zu erhalten; und
Vorhersagen, unter Verwendung eines Dynamikdecodierers, eines simulierten Kleidungsstücks auf der Zielkörperpose basierend auf dem verarbeiteten codierten Kleidungsstückgraphen mit dem aktualisierten Satz von Kantenmerkmalen und dem aktualisierten Satz von Knotenmerkmalen.

7. System nach Anspruch 6, wobei die Mehrzahl von kleidungsstückbewussten Knotenmerkmalen (X) erhalten wird durch:
Erzeugen, unter Verwendung eines ersten Codierers aus dem ersten Satz einer Mehrzahl von Codierern, einer Mehrzahl von hochdimensionalen geometrischen Kleidungsstückmerkmalen pro Scheitelpunkt (*X^{gar}*) basierend auf der Kleidungsstückvorlage; und
Verketten, unter Verwendung eines zweiten Codierers aus dem ersten Satz einer Mehrzahl von Codierern, der Mehrzahl von hochdimensionalen geometrischen Kleidungsstückmerkmalen pro Scheitelpunkt (*X^{gar}*), von gewebespezifischen Daten, die (*f*) mit der Kleidungsstückvorlage assoziiert sind, und einer relativen Position einer Mehrzahl von Kleidungsstückscheitelpunkten (*p*, *p^{vorher}*), die in der Kleidungsstückvorlage enthalten sind, um die Mehrzahl von kleidungsstückbewussten Knotenmerkmalen ( 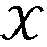 ) zu erhalten.

8. System nach Anspruch 6, wobei die Mehrzahl von körper- und bewegungsbewussten Knotenmerkmalen (*µ*) erhalten wird durch:
Erzeugen, unter Verwendung eines ersten Codierers aus dem zweiten Satz einer Mehrzahl von Codierern, einer Mehrzahl von geometrischen Körpermerkmalen pro Scheitelpunkt (*X^{körper}*) basierend auf einem Kleidungsstückabschnitt, der in der kanonischen Körperpose enthalten ist;
Erzeugen, unter Verwendung eines zweiten Codierers aus dem zweiten Satz einer Mehrzahl von Codierern, einer oder mehrerer kleidungsstückbewusster Körpersemantiken (*S*) basierend auf der kanonischen Körperpose; und
Verketten, unter Verwendung eines dritten Codierers aus dem zweiten Satz einer Mehrzahl von Codierern, einer Mehrzahl von relativen Bewegungsvektoren (*δ*), der einen oder der mehreren kleidungsstückbewussten Körpersemantiken (*S*) und der Mehrzahl von geometrischen Körpermerkmalen pro Scheitelpunkt (*X^{körper}*), um die Mehrzahl von körper- und bewegungsbewussten Knotenmerkmalen (*µ*) zu erhalten.

9. System nach Anspruch 6, wobei das simulierte Kleidungsstück Informationen über die Geschwindigkeit an jedem Scheitelpunkt des verarbeiteten codierten Kleidungsstückgraphen umfasst.

10. System nach Anspruch 9, wobei die Geschwindigkeit an jedem Scheitelpunkt des verarbeiteten codierten Kleidungsstückgraphen die Richtung und Größe der Bewegung der Kleidungsstückvorlage umfasst.

11. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, bewirken:
Erhalten von Eingabedaten, die eine Kleidungsstückvorlage, die auf eine kanonische Körperpose drapiert ist, und eine Zielkörperpose umfassen;
Erzeugen, unter Verwendung über einen ersten Satz einer Mehrzahl von Codierern, einer Mehrzahl von kleidungsstückbewussten Knotenmerkmalen (X) basierend auf der Kleidungsstückvorlage;
Erzeugen, unter Verwendung eines zweiten Satzes einer Mehrzahl von Codierern, einer Mehrzahl von körper- und bewegungsbewussten Knotenmerkmalen (*µ*) basierend auf der kanonischen Körperpose und der Zielkörperpose;
Verschmelzen der Mehrzahl von kleidungsstückbewussten Knotenmerkmalen (X) und der Mehrzahl von körper- und bewegungsbewussten Knotenmerkmalen (*µ*), um einen Satz von verschmolzenen Knotenmerkmalen (*η*) zu erhalten;
Erhalten eines Satzes von Kantenmerkmalen (π) basierend auf einer Mehrzahl von relativen Positionen (*ε*, *ε^{vorher}*) einer Mehrzahl von Kanten, die in der Kleidungsstückvorlage enthalten sind;
Erzeugen eines codierten Kleidungsstückgraphen basierend auf dem Satz von verschmolzenen Knotenmerkmalen (*η*) und dem Satz von Kantenmerkmalen (π);
Verarbeiten des codierten Kleidungsstückgraphen, um einen verarbeiteten codierten Kleidungsstückgraphen mit einem aktualisierten Satz von Kantenmerkmalen und einem aktualisierten Satz von Knotenmerkmalen zu erhalten; und
Vorhersagen, unter Verwendung eines Dynamikdecodierers, eines simulierten Kleidungsstücks auf der Zielkörperpose basierend auf dem verarbeiteten codierten Kleidungsstückgraphen mit dem aktualisierten Satz von Kantenmerkmalen und dem aktualisierten Satz von Knotenmerkmalen.

12. Ein oder mehrere nichtflüchtige maschinenlesbare Informationsspeichermedien nach Anspruch 11, wobei die Mehrzahl von kleidungsstückbewussten Knotenmerkmalen (X) erhalten wird durch:
Erzeugen, unter Verwendung eines ersten Codierers aus dem ersten Satz einer Mehrzahl von Codierern, einer Mehrzahl von hochdimensionalen geometrischen Kleidungsstückmerkmalen pro Scheitelpunkt (*X^{gar}*) basierend auf der Kleidungsstückvorlage; und
Verketten, unter Verwendung eines zweiten Codierers aus dem ersten Satz einer Mehrzahl von Codierern, der Mehrzahl von hochdimensionalen geometrischen Kleidungsstückmerkmalen pro Scheitelpunkt (*X^{gar}*)*,* von gewebespezifischen Daten, die (f) mit der Kleidungsstückvorlage assoziiert sind, und einer relativen Position einer Mehrzahl von Kleidungsstückscheitelpunkten (*p, p^{vorher}*)*,* die in der Kleidungsstückvorlage enthalten sind, um die Mehrzahl von kleidungsstückbewussten Knotenmerkmalen ( 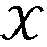 ) zu erhalten.

13. Ein oder mehrere nichtflüchtige maschinenlesbare Informationsspeichermedien nach Anspruch 11, wobei die Mehrzahl von körper- und bewegungsbewussten Knotenmerkmalen (*µ*) erhalten wird durch:
Erzeugen, unter Verwendung eines ersten Codierers aus dem zweiten Satz einer Mehrzahl von Codierern, einer Mehrzahl von geometrischen Körpermerkmalen pro Scheitelpunkt (*X^{körper}*) basierend auf einem Kleidungsstückabschnitt, der in der kanonischen Körperpose enthalten ist;
Erzeugen, unter Verwendung eines zweiten Codierers aus dem zweiten Satz einer Mehrzahl von Codierern, einer oder mehrerer kleidungsstückbewusster Körpersemantiken (*S*) basierend auf der kanonischen Körperpose; und
Verketten, unter Verwendung eines dritten Codierers aus dem zweiten Satz einer Mehrzahl von Codierern, einer Mehrzahl von relativen Bewegungsvektoren (*δ*), der einen oder der mehreren kleidungsstückbewussten Körpersemantiken (*S*) und der Mehrzahl von geometrischen Körpermerkmalen pro Scheitelpunkt (*X^{körper}*)*,* um die Mehrzahl von körper- und bewegungsbewussten Knotenmerkmalen (*µ*) zu erhalten.

14. Ein oder mehrere nichtflüchtige maschinenlesbare Informationsspeichermedien nach Anspruch 11, wobei das simulierte Kleidungsstück Informationen über die Geschwindigkeit an jedem Scheitelpunkt des verarbeiteten codierten Kleidungsstückgraphen umfasst.

15. Ein oder mehrere nichtflüchtige maschinenlesbare Informationsspeichermedien nach Anspruch 14, wobei die Geschwindigkeit an jedem Scheitelpunkt des verarbeiteten codierten Kleidungsstückgraphen die Richtung und Größe der Bewegung der Kleidungsstückvorlage umfasst.

## Revendications

1. Procédé mis en oeuvre par processeur comprenant :
l'obtention, via un ou plusieurs processeurs matériels, de données d'entrée comprenant un modèle de vêtement drapé sur une pose corporelle canonique, et une pose corporelle cible (202) ;
la génération, en utilisant via un premier ensemble d'une pluralité de codeurs via les un ou plusieurs processeurs matériels, d'une pluralité de caractéristiques de noeud sensibles au vêtement (*X*) sur la base du modèle de vêtement (204) ;
la génération, en utilisant un second ensemble d'une pluralité de codeurs via les un ou plusieurs processeurs matériels, d'une pluralité de caractéristiques de noeud sensibles au corps et au mouvement (*µ*) sur la base de la pose corporelle canonique, et de la pose corporelle cible (206) ;
la fusion, via les un ou plusieurs processeurs matériels, de la pluralité de caractéristiques de noeud sensibles au vêtement ( 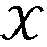 ) et de la pluralité de caractéristiques de noeud sensibles au corps et au mouvement (*µ*) pour obtenir un ensemble de caractéristiques de noeud fusionnées (*η*) (208) ;
l'obtention, via les un ou plusieurs processeurs matériels, d'un ensemble de caractéristiques d'arête (*π*) sur la base d'une pluralité de positions relatives (*ε*, *ε^{précédent}*) d'une pluralité d'arêtes compris dans le modèle de vêtement (210) ;
la génération, via les un ou plusieurs processeurs matériels, d'un graphe de vêtement codé sur la base de l'ensemble de caractéristiques de noeud fusionnées (*η*) et de l'ensemble de caractéristiques d'arête (*π*) (212) ;
le traitement, via les un ou plusieurs processeurs matériels, du graphe de vêtement codé pour obtenir un graphe de vêtement codé traité avec un ensemble mis à jour de caractéristiques d'arête et un ensemble mis à jour de caractéristiques de noeud (214) ; et
la prédiction, en utilisant un décodeur de dynamique via les un ou plusieurs processeurs matériels, d'un vêtement simulé sur la pose corporelle cible sur la base du graphe de vêtement codé traité avec l'ensemble mis à jour de caractéristiques d'arête et l'ensemble mis à jour de caractéristiques de noeud (216).

2. Procédé mis en oeuvre par processeur selon la revendication 1, dans lequel la pluralité de caractéristiques de noeud sensibles au vêtement ( 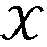 ) est obtenue par :
la génération, en utilisant un premier codeur parmi le premier ensemble d'une pluralité de codeurs via les un ou plusieurs processeurs matériels, d'une pluralité de caractéristiques géométriques de vêtement par sommet à haute dimension (*X^{gar}*) sur la base du modèle de vêtement ; et
la concaténation, en utilisant un second codeur parmi le premier ensemble d'une pluralité de codeurs via les un ou plusieurs processeurs matériels, de la pluralité de caractéristiques géométriques de vêtement par sommet à haute dimension (*X^{gar}*)*,* de données spécifiques au tissu associées (*f*) au modèle de vêtement, et d'une position relative d'une pluralité de sommets de vêtement *(p, p^{précédent}*) compris dans le modèle de vêtement pour obtenir la pluralité de caractéristiques de noeud sensibles au vêtement (*X*).

3. Procédé mis en oeuvre par processeur selon la revendication 1, dans lequel la pluralité de caractéristiques de noeud sensibles au corps et au mouvement (*µ*) est obtenue par :
la génération, en utilisant un premier codeur parmi le second ensemble d'une pluralité de codeurs via les un ou plusieurs processeurs matériels, d'une pluralité de caractéristiques géométriques de corps par sommet (*X^{corps}*) sur la base d'une partie de vêtement comprise dans la pose corporelle canonique ;
la génération, en utilisant un second codeur parmi le second ensemble d'une pluralité de codeurs via les un ou plusieurs processeurs matériels, d'une ou plusieurs sémantiques corporelles sensibles au vêtement (*S*) sur la base de la pose corporelle canonique ; et
la concaténation, en utilisant un troisième codeur parmi le second ensemble d'une pluralité de codeurs via les un ou plusieurs processeurs matériels, d'une pluralité de vecteurs de mouvement relatif (*δ*), des une ou plusieurs sémantiques corporelles sensibles au vêtement (*S*), et de la pluralité de caractéristiques géométriques de corps par sommet (*X^{corps}*) pour obtenir la pluralité de caractéristiques de noeud sensibles au corps et au mouvement (*µ*).

4. Procédé mis en oeuvre par processeur selon la revendication 1, dans lequel le vêtement simulé comprend des informations sur la vitesse à chaque sommet du graphe de vêtement codé traité.

5. Procédé mis en oeuvre par processeur selon la revendication 4, dans lequel la vitesse à chaque sommet du graphe de vêtement codé traité comprend la direction et l'amplitude du mouvement du modèle de vêtement.

6. Système (100), comprenant :
une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour :
obtenir des données d'entrée comprenant un modèle de vêtement drapé sur une pose corporelle canonique, et une pose corporelle cible ;
générer, via un premier ensemble d'une pluralité de codeurs, une pluralité de caractéristiques de noeud sensibles au vêtement (*X*) sur la base du modèle de vêtement ;
générer, via un second ensemble d'une pluralité de codeurs, une pluralité de caractéristiques de noeud sensibles au corps et au mouvement (*µ*) sur la base de la pose corporelle canonique, et de la pose corporelle cible ;
fusionner la pluralité de caractéristiques de noeud sensibles au vêtement (*X*) et la pluralité de caractéristiques de noeud sensibles au corps et au mouvement (*µ*) pour obtenir un ensemble de caractéristiques de noeud fusionnées (*η*) ;
obtenir un ensemble de caractéristiques d'arête (*π*) sur la base d'une pluralité de positions relatives (*ε*, *ε^{précédent}*) d'une pluralité d'arêtes compris dans le modèle de vêtement ;
générer un graphe de vêtement codé sur la base de l'ensemble de caractéristiques de noeud fusionnées (*η*) et de l'ensemble de caractéristiques d'arête (*π*) ;
traiter le graphe de vêtement codé pour obtenir un graphe de vêtement codé traité avec un ensemble mis à jour de caractéristiques d'arête et un ensemble mis à jour de caractéristiques de noeud ; et
prédire, en utilisant un décodeur de dynamique, un vêtement simulé sur la pose corporelle cible sur la base du graphe de vêtement codé traité avec l'ensemble mis à jour de caractéristiques d'arête et l'ensemble mis à jour de caractéristiques de noeud.

7. Système selon la revendication 6, dans lequel la pluralité de caractéristiques de noeud sensibles au vêtement (*X*) est obtenue par :
la génération, en utilisant un premier codeur parmi le premier ensemble d'une pluralité de codeurs, d'une pluralité de caractéristiques géométriques de vêtement par sommet à haute dimension (*X^{gar}*) sur la base du modèle de vêtement ; et
la concaténation, en utilisant un second codeur parmi le premier ensemble d'une pluralité de codeurs, de la pluralité de caractéristiques géométriques de vêtement par sommet à haute dimension (*X^{gar}*)*,* de données spécifiques au tissu associées (*f*) au modèle de vêtement, et d'une position relative d'une pluralité de sommets de vêtement (*p, p^{précédent}*) compris dans le modèle de vêtement pour obtenir la pluralité de caractéristiques de noeud sensibles au vêtement (*X*).

8. Système selon la revendication 6, dans lequel la pluralité de caractéristiques de noeud sensibles au corps et au mouvement (*µ*) est obtenue par :
la génération, en utilisant un premier codeur parmi le second ensemble d'une pluralité de codeurs, d'une pluralité de caractéristiques géométriques de corps par sommet (*X^{corps}*) sur la base d'une partie de vêtement comprise dans la pose corporelle canonique ;
la génération, en utilisant un second codeur parmi le second ensemble d'une pluralité de codeurs, d'une ou plusieurs sémantiques corporelles sensibles au vêtement (*S*) sur la base de la pose corporelle canonique ; et
la concaténation, en utilisant un troisième codeur parmi le second ensemble d'une pluralité de codeurs, d'une pluralité de vecteurs de mouvement relatif (*δ*), des une ou plusieurs sémantiques corporelles sensibles au vêtement (*S*), et de la pluralité de caractéristiques géométriques de corps par sommet (*X^{corps}*) pour obtenir la pluralité de caractéristiques de noeud sensibles au corps et au mouvement (*µ*).

9. Système selon la revendication 6, dans lequel le vêtement simulé comprend des informations sur la vitesse à chaque sommet du graphe de vêtement codé traité.

10. Système selon la revendication 9, dans lequel la vitesse à chaque sommet du graphe de vêtement codé traité comprend la direction et l'amplitude du mouvement du modèle de vêtement.

11. Un ou plusieurs supports de stockage d'informations lisibles par machine non transitoires comprenant une ou plusieurs instructions qui, lorsqu'elles sont exécutées par un ou plusieurs processeurs matériels, amènent :
l'obtention, de données d'entrée comprenant un modèle de vêtement drapé sur une pose corporelle canonique, et une pose corporelle cible ;
la génération, en utilisant via un premier ensemble d'une pluralité de codeurs, d'une pluralité de caractéristiques de noeud sensibles au vêtement (*X*) sur la base du modèle de vêtement ;
la génération, en utilisant un second ensemble d'une pluralité de codeurs, d'une pluralité de caractéristiques de noeud sensibles au corps et au mouvement (*µ*) sur la base de la pose corporelle canonique, et de la pose corporelle cible ;
la fusion de la pluralité de caractéristiques de noeud sensibles au vêtement (*X*) et de la pluralité de caractéristiques de noeud sensibles au corps et au mouvement (*µ*) pour obtenir un ensemble de caractéristiques de noeud fusionnées (*η*) ;
l'obtention d'un ensemble de caractéristiques d'arête (*π*) sur la base d'une pluralité de positions relatives (*ε*, *ε^{précédent}*) d'une pluralité d'arêtes compris dans le modèle de vêtement ;
la génération d'un graphe de vêtement codé sur la base de l'ensemble de caractéristiques de noeud fusionnées (*η*) et de l'ensemble de caractéristiques d'arête (*π*) ;
le traitement du graphe de vêtement codé pour obtenir un graphe de vêtement codé traité avec un ensemble mis à jour de caractéristiques d'arête et un ensemble mis à jour de caractéristiques de noeud ; et
la prédiction, en utilisant un décodeur de dynamique, d'un vêtement simulé sur la pose corporelle cible sur la base du graphe de vêtement codé traité avec l'ensemble mis à jour de caractéristiques d'arête et l'ensemble mis à jour de caractéristiques de noeud.

12. Un ou plusieurs supports de stockage d'informations lisibles par machine non transitoires selon la revendication 11, dans lequel la pluralité de caractéristiques de noeud sensibles au vêtement ( 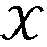 ) est obtenue par :
la génération, en utilisant un premier codeur parmi le premier ensemble d'une pluralité de codeurs, d'une pluralité de caractéristiques géométriques de vêtement par sommet à haute dimension (*X^{gar}*) sur la base du modèle de vêtement ; et
la concaténation, en utilisant un second codeur parmi le premier ensemble d'une pluralité de codeurs, de la pluralité de caractéristiques géométriques de vêtement par sommet à haute dimension (*X^{gar}*)*,* de données spécifiques au tissu associées (*f*) au modèle de vêtement, et d'une position relative d'une pluralité de sommets de vêtement (*p, p^{précédent}*) compris dans le modèle de vêtement pour obtenir la pluralité de caractéristiques de noeud sensibles au vêtement (*X*).

13. Un ou plusieurs supports de stockage d'informations lisibles par machine non transitoires selon la revendication 11**,** dans lequel la pluralité de caractéristiques de noeud sensibles au corps et au mouvement (*µ*) est obtenue par :
la génération, en utilisant un premier codeur parmi le second ensemble d'une pluralité de codeurs, d'une pluralité de caractéristiques géométriques de corps par sommet (*X^{corps}*) sur la base d'une partie de vêtement comprise dans la pose corporelle canonique ;
la génération, en utilisant un second codeur parmi le second ensemble d'une pluralité de codeurs, d'une ou plusieurs sémantiques corporelles sensibles au vêtement (*S*) sur la base de la pose corporelle canonique ; et
la concaténation, en utilisant un troisième codeur parmi le second ensemble d'une pluralité de codeurs, d'une pluralité de vecteurs de mouvement relatif (*δ*), des une ou plusieurs sémantiques corporelles sensibles au vêtement (*S*), et de la pluralité de caractéristiques géométriques de corps par sommet (*X^{corps}*) pour obtenir la pluralité de caractéristiques de noeud sensibles au corps et au mouvement (*µ*).

14. Un ou plusieurs supports de stockage d'informations lisibles par machine non transitoires selon la revendication 11, dans lequel le vêtement simulé comprend des informations sur la vitesse à chaque sommet du graphe de vêtement codé traité.

15. Un ou plusieurs supports de stockage d'informations lisibles par machine non transitoires selon la revendication 14, dans lequel la vitesse à chaque sommet du graphe de vêtement codé traité comprend la direction et l'amplitude du mouvement du modèle de vêtement.
